# EUROPEAN PATENT SPECIFICATION

(11) **EP 3 848 726 B1**
(45) Date of publication and mention of the grant of the patent: **30.08.2023**
(21) Application number: 18932498.1
(22) Date of filing: 07.09.2018
(51) Int. Cl.: G01S 17/10

(54) **LASER DISTANCE MEASUREMENT MODULE, APPARATUS, AND METHOD, AND MOBILE PLATFORM**
LASERENTFERNUNGSMESSMODUL, VORRICHTUNG UND VERFAHREN SOWIE MOBILE PLATTFORM
MODULE, APPAREIL ET PROCÉDÉ DE MESURE DE DISTANCE À LASER, ET PLATE-FORME MOBILE

(43) Date of publication of application: 14.07.2021
(73) Proprietor: SZ DJI Technology Co., Ltd., Shenzhen, Guangdong 518057 (CN)
(72) Inventor: LIU, Xiang, Shenzhen, Guangdong 518057 (CN); HONG, Xiaoping, Shenzhen, Guangdong 518057 (CN)
(74) Representative: Appelt, Christian W.
(86) International application number: PCT/CN2018/104675
(87) International publication number: WO 2020/047857

(56) References cited:
- WO-A1-2015/077614
- CN-A- 101 201 403
- CN-A- 106 932 783
- CN-A- 106 970 391
- CN-U- 207 408 591
- CN-U- 207 408 591
- US-A1- 2015 293 224

## Description

### TECHNICAL FIELD

The present disclosure relates to the field of laser distance measurement and, more particularly, to a laser distance measurement device, apparatus, and method, and a mobile platform.

### BACKGROUND

In the field of laser distance measurement, laser pulse sequences with a plurality of emission paths can be emitted to ensure coverage of a detected object.

However, in this case, multiple apparatuses are needed to process the laser pulse sequences with the plurality of emission paths.

Correspondingly, this will bring about problems of high power consumption, a high cost, and a large size.

WO 2015/077614 A1 discloses: A LiDAR can include a laser, an avalanche photodiode, a splitter, and a processor. The laser can be configured to emit a narrow electromagnetic pulse. The avalanche photodiode can be configured to receive one or more electromagnetic pulses and output a response signal in response to said pulses and can also be positioned to receive at least one reflected pulse, reflected by an object external from the LiDAR sensor and caused by the laser. The avalanche photodiode can also have a bias voltage applied to it affecting the response signal. The splitter can be positioned to receive the narrow electromagnetic pulse and split it into at least one external pulse directed toward the object external from the LiDAR sensor and at least one calibration pulse directed toward the photodiode. Further, the processor can be configured to adjust the bias voltage.

CN207408591 (U) discloses a three-dimensional laser ranging device with time division multiplexing of an array APD.

### SUMMARY

The present invention relates to a laser distance measurement device according to independent claim 1, to a laser distance measurement apparatus according to claim 12, to a laser distance measurement method according to independent claim 14, and to a mobile platform according to claim 15, to reduce the power consumption of the laser distance measurement, reduce the cost of the laser distance measurement, and reduce the size of the distance measurement device and/or apparatus.

In the present disclosure, in the at least two channels of the laser distance measurement device or apparatus (where each of the at least two channels includes a circuit corresponding to a laser pulse sequence with an emission path), at least one device is multiplexed. Correspondingly, under the condition of ensuring the detection coverage of the object to be detected, the power consumption caused by laser distance measurement can be reduced, and the cost and size of the laser distance measurement device or apparatus can be reduced. The complexity of circuits of the laser distance measurement device or apparatus can also be reduced.

### BRIEF DESCRIPTION OF THE DRAWINGS

In order to explain the technical solutions of the embodiments of the present disclosure more clearly, the drawings that need to be used in the description of the embodiments or the prior art will be introduced briefly below. Obviously, the drawings in the following description are only some of the embodiments of the present disclosure. For those of ordinary skill in the art, without creative work, other drawings can be obtained from these drawings.
FIG. 1 illustrates an exemplary laser distance measurement apparatus consistent with various embodiments of the present disclosure.
FIG. 2 illustrates a timing diagram of an exemplary single channel measurement consistent with various embodiments of the present disclosure.
FIG. 3 illustrates a timing diagram of an exemplary multiple-channel measurement consistent with various embodiments of the present disclosure.
FIG. 4 illustrates an exemplary emission circuit consistent with various embodiments of the present disclosure.
FIG. 5 illustrates device multiplexing of an exemplary emission circuit consistent with various embodiments of the present disclosure.
FIG. 6 illustrates device multiplexing of another exemplary emission circuit consistent with various embodiments of the present disclosure.
FIG. 7 illustrates an exemplary receiver circuit consistent with various embodiments of the present disclosure.
FIG. 8 illustrates device multiplexing of an exemplary receiver circuit consistent with various embodiments of the present disclosure.
FIG. 9 illustrates device multiplexing of another exemplary receiver circuit consistent with various embodiments of the present disclosure.
FIG. 10 illustrates device multiplexing of another exemplary receiver circuit consistent with various embodiments of the present disclosure.
FIG. 11 illustrates device multiplexing of an exemplary sampling circuit consistent with various embodiments of the present disclosure.
FIG. 12 illustrates a timing diagram of an exemplary laser distance measurement consistent with various embodiments of the present disclosure.
FIG. 13 illustrates channel triggering of an exemplary control circuit consistent with various embodiments of the present disclosure.
FIG. 14 illustrates channel triggering of another exemplary control circuit consistent with various embodiments of the present disclosure.
FIG. 15 illustrates device multiplexing of an exemplary laser distance measurement device consistent with various embodiments of the present disclosure.
FIG. 16 illustrates emission directions of an exemplary laser pulse consistent with various embodiments of the present disclosure.
FIG. 17 illustrates device multiplexing of another exemplary laser distance measurement device consistent with various embodiments of the present disclosure.
FIG. 18 illustrates another exemplary laser distance measurement apparatus consistent with various embodiments of the present disclosure.
FIG. 19 illustrates another exemplary laser distance measurement apparatus consistent with various embodiments of the present disclosure.
FIG. 20 illustrates an exemplary laser distance measurement method consistent with various embodiments of the present disclosure.
FIG. 21 illustrates an exemplary unmanned aerial vehicle consistent with various embodiments of the present disclosure.

### DETAILED DESCRIPTION OF THE EMBODIMENTS

Technical solutions of the present disclosure will be described with reference to the drawings. It will be appreciated that the described embodiments are some rather than all of the embodiments of the present disclosure. Other embodiments conceived by those having ordinary skills in the art on the basis of the described embodiments without inventive efforts should fall within the scope of the present disclosure.

Unless otherwise defined, all the technical and scientific terms used herein have the same or similar meanings as generally understood by one of ordinary skill in the art. As described herein, the terms used in the specification of the present disclosure are intended to describe example embodiments, instead of limiting the present disclosure.

Laser distance measurement uses a laser pulse to measure a distance between a laser distance measurement apparatus and a detected object. Further, a position of the detected object relative to the laser distance measurement apparatus can also be detected.

Optionally, the laser distance measurement apparatus measures a time of light propagation from the laser distance measurement apparatus to the detected object, that is, the time-of-flight (TOF), to detect the distance between the laser distance measurement apparatus and the detected object. For example, when a flight time of the laser round-trip propagation is 1 µs, the distance is 150 m.

In one embodiment of the present disclosure, the laser distance measurement apparatus includes a radar such as a laser radar.

It should be understood that the laser distance measurement apparatus is a perception system for the outside world, and may acquire the three-dimensional stereo information of the outside world, and may be no longer limited to the plane perception of the outside world such as a camera. The principle is to actively transmit a laser pulse sequence to the outside, detect the reflected pulse sequence, determine the distance to the detected object according to the time difference between the transmission and reception, and combine the transmission angle information of the light pulse to reconstruct and obtain the three-dimensional depth information.

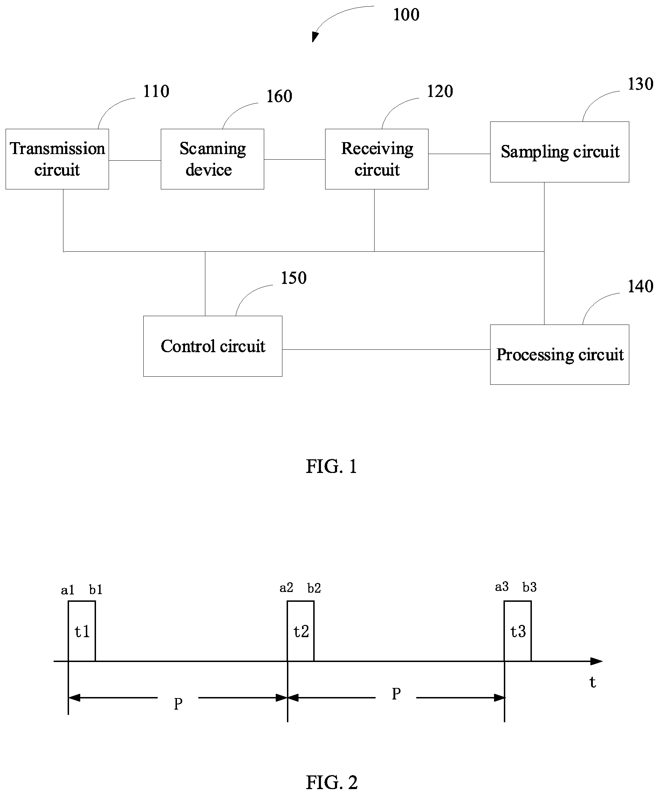

For description purposes, the laser distance measurement apparatus 100 in FIG. 1 will be used to illustrate the working flow of laser distance measurement.

As illustrated in FIG. 1, the laser distance measurement apparatus 100 includes a transmission circuit 110, a receiving circuit 120, a sampling circuit 130, and a processing circuit 140.

The transmission circuit 110 emits a laser pulse sequence. The receiving circuit 120 receives the laser pulse sequence reflected by the object to be detected, perform photoelectric conversion on the laser pulse sequence to obtain an electrical signal, and then process the electrical signal to output the electrical signal to the sampling circuit 130. The sampling circuit 130 samples the electrical signal to obtain a sampling result. The processing circuit 140 determines the distance between the laser distance measuring apparatus 100 and the object to be detected based on the sampling result of the sampling circuit 130.

Optionally, the laser distance measuring apparatus 100 further includes a control circuit 150 configured to control other circuits, for example, to control the working time of each circuit and set parameters of each circuit.

For description purposes only, the embodiment in FIG. 1 where the laser distance measurement apparatus includes one transmission circuit, one receiving circuit, one sampling circuit, and one processing circuit, is used as an example to illustrate the present disclosure, and should not limit the scopes of the present disclosure. In some other embodiments, the laser distance measurement apparatus may include a plurality of transmission circuits, a plurality of receiving circuits, a plurality of sample circuits, and a plurality of processing circuits. It should be noted that plurality mentioned in the present disclosure includes the scenario of two.

It should be noted that besides the circuits in FIG. 1, the laser distance measurement apparatus 100 may further include a scanning device 160. The scanning device 160 may be configured to cause the laser pulse sequence emitted from the transmission circuit to change a propagation direction and then emit. At least a portion of the light beam reflected by the object to be detected may pass through the scanning device 160 to enter the receiving circuit.

A device including the transmission circuit 110, the receiving circuit 120, the sampling circuit 130, and the processing circuit 140, or a device including the transmission circuit 110, the receiving circuit 120, the sampling circuit 130, the processing circuit 140, and the control circuit 150 may be referred to as a laser distance measurement device. The laser distance measurement device 150 may be independent of other devices, such as the scanning device 160.

According to the invention, there are a plurality of emission paths of the laser pulse sequence emitted by the transmission circuit.

In some embodiments, the transmission circuit may only include one emitting light source, and the laser pulse sequence emitted by the emitting light source may be adjusted by an optical path changing element (such as a galvanometer) to change the emission path to form the laser pulse sequence with the plurality of emission paths at different times. The laser pulse sequence with the plurality of emission paths may be non-parallel.

In some other embodiments, the transmission circuit may include a plurality of emitting light sources. The plurality of emitting light sources may emit laser pulse sequences along different emission paths respectively. The different emission paths may be different emission positions and/or different emission directions. The multiple laser pulse sequences respectively emitted by the plurality of emitting light sources may be parallel or non-parallel.

A laser distance measurement apparatus (or device) that emits along a single emission path may be called a single-thread or single-channel laser distance measurement apparatus (or device), and a laser distance measurement apparatus (or device) that emits along a plurality of emission paths may be called a multiple-thread or multi-channel laser distance measurement apparatus (or device). The measurement performed by a single-thread or single-channel laser distance measurement apparatus (or device) may be called a single-thread or single-channel measurement, and the measurement performed by a multi-thread or multi-channel laser distance measurement apparatus (or device) may be called a multi-thread or multi-channel measurement. The circuit corresponding to the laser pulse sequence of an emission path (including the transmission circuit, the receiving circuit, the sampling circuit, and the processing circuit) may be called a single channel (the channel may be also be called a measurement channel) or a single thread. The circuit corresponding to the laser pulse sequences with a plurality of emission paths may be called multi-channel or multi-thread.

In a single-channel measurement, during specific measurement, a transmission circuit may emit a laser pulse sequence along an emission path; a receiving circuit may receive the laser pulse sequence with the emission path after the laser pulse sequence is reflected by the object to be detected and perform photoelectric conversion on the laser pulse sequence to obtain an electrical signal, or further process the electrical signal; a sampling circuit may sample the electrical signal; and a processing circuit may calculate the distance between the object to be detected and the laser distance measurement apparatus based on the sampling result.

Specifically, in a single-channel laser distance measurement apparatus, during one duty cycle: a transmission circuit may emit a laser pulse sequence (that is, a laser pulse sequence with an emission path), and the result of this measurement may be determined after a sequential process of the receiving circuit, the sampling circuit, and the processing circuit. In practical disclosures, in a duty cycle, the time required from emitting the laser pulse sequence to calculating the distance by the calculation circuit may be t. A specific magnitude of t may depend on the distance between the object detected by the laser pulse sequence and the laser distance measuring apparatus. When the distance is farther, t is larger. When the object is farther from the laser distance measuring apparatus, the light signal reflected by the object is weaker. When the reflected light signal is weak to a certain extent, the laser distance measuring apparatus may not be able to detect the light signal. Therefore, the distance between the object corresponding to the weakest optical signal that can be detected by the laser distance measurement apparatus and the laser distance measurement apparatus is called the farthest detection distance of the laser distance measurement apparatus. For the convenience of description, the value of t corresponding to the farthest detection distance will be called t0 hereinafter. In the embodiments of the present disclosure, the duty cycle may be greater than t0. In some embodiment, the duty cycle may be at least 5 times greater than t0. In some other embodiments, the duty cycle may be at least 10 times greater than t0. In some other embodiments, the duty cycle may be 15 times greater than t0.

For example, as shown in FIG. 2, the transmission circuit emits a laser pulse sequence at time a1. After the laser pulse sequence is processed by the receiving circuit, the sampling circuit, and the processing circuit sequentially, the calculation result is obtained at time b1, and the duration between time a1 and time b1 is t1. Then the transmission circuit emits a laser pulse sequence at time a2. After the laser pulse sequence is processed by the receiving circuit, the sampling circuit, and the processing circuit sequentially, the calculation result is obtained at time b2, and the duration between time a2 and time b2 is t2. Then, the transmission circuit emits a laser pulse sequence at time a3. After the laser pulse sequence is processed by the receiving circuit, the sampling circuit, and the processing circuit sequentially, the calculation result is obtained at the time b3, and a duration between the time a3 and the time b3 is t3. The duration of 11, t2, and t3 are respectively less than or equal to the above t0; a2 is later than b1, a3 is later than b2; the duration between a1 and a2 and the duration between a2 and a3 are the same duration P, and the duration P is the duty cycle mentioned above.

Generally, in laser distance measurement disclosures such as autonomous driving and map surveying, to obtain better image quality and facilitate object identification, it is usually required that a point cloud density and a point cloud coverage are sufficiently high. The laser radar with only one emission path may have limited point cloud coverage in a short time period. A scanning trajectory of each laser pulse sequence emitted by the laser radar with a plurality of emission paths may be different, and each path may compensate for each other. The point cloud coverage may be improved effectively in a short time period.

The laser pulse sequences may be emitted from different directions or different positions. According to angle information and distance information, each measurement may be represented by a point in the three-dimensional space. A plurality of points may be combined to represent an object distribution map in the three-dimensional space, which may be called a point cloud.

For example, a point cloud in 0.1 seconds may be used as a picture, and a plurality of pictures may be obtained in a plurality of successive 0.1 s. The plurality of pictures may be combined to form a video to be displayed. The formed video in the three-dimensional space is 10 frames per second.

The working mode of each channel of the multi-channel laser distance measurement apparatus may be same as that of the single-channel laser distance measurement apparatus described above. Multiple channels may be independent of each other.

In one embodiment, a time point at which the transmission circuit of each channel respectively emits the laser pulse sequence may be same.

In another embodiment, each channel may work in sequence. An emission time interval between two adjacent laser pulses may be called an emission period. For example, in three-channel apparatus, after the transmission circuit of the first channel emits a laser pulse sequence, the transmitter circuit of the second channel emits laser pulses after an interval of T, the transmitter circuit of the third channel emits laser pulses after an interval of T, and then the transmitter circuit of the first channel emits laser pulses after an interval of T. After each channel emits the laser pulses, the optical signal reflected by the farthest object that can be detected may be processed by the receiving circuit, the sampling circuit and the processing circuit in the next time period T. For one of the channels, the period between the start time of the laser pulse sequence emitted by the transmission circuit and the time when the calculation circuit completes the calculation may be referred to as the duty cycle of the channel.

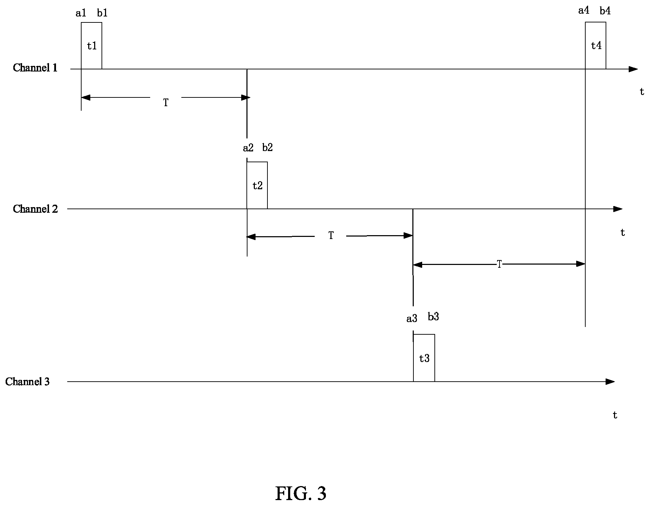

For example, as shown in FIG. 3, the transmitter circuit of the channel 1 emits a laser pulse sequence at time a1. After the laser pulse sequence is processed by the receiver circuit, the sampling circuit, and the processing circuit of the channel 1, the calculation result is obtained at time b1. A duration between and the time a1 and the time b1 is t1. Then, the transmitter circuit of the channel 2 emits a laser pulse sequence at time a2, and the laser pulse sequence is processed by the receiver circuit, the sampling circuit and the processing circuit of channel 2 in turn, and the calculation result is obtained at time b2. A duration between the time a2 and the time b2 is t2. Then, the transmitter circuit of the channel 3 emits a laser pulse sequence at time a3, and the laser pulse sequence is processed by the receiving circuit, the sampling circuit, and the processing circuit of the channel 3 in turn, and the calculation result is obtained at time b3. A duration between the time a3 and the time b3 is t3. Then, the transmitter circuit of channel 1 emits a laser pulse sequence at time a4, and the laser pulse sequence is processed by the receiver circuit, sampling circuit and processing circuit of the channel 1 in turn, and the calculation result is obtained at time b4. A duration between the time a4 and the time b4 is t4. a2 is later than b1, a3 is later than b2, and a4 is later than b3. The duration between a1 and a2, the duration between a2 and a3, and the duration between a3 and a4 are all the same duration T. Of course, in some other embodiments, the duration of a3 and a4 may not be equal to T. For example, if the duty cycle of a single channel is P, the duration may be equal to P-2T.

However, for a multi-channel laser distance measurement apparatus, when each channel is independent of each other, it requires circuit resources which are several times of a single-channel laser distance measurement apparatus for support. That means more complicated circuit design, higher cost, higher power consumption, and larger size.

According to the invention, different channels share at least one element and/or at least one device in at least one of the transmission circuit.

To understand this disclosure more clearly, the following will separately introduce the embodiment where the devices of the transmission circuit are multiplexed, the embodiment where the devices of the receiving circuit are multiplexed, the embodiment where the devices of the sampling circuit are multiplexed, and the embodiment where the devices of the processing circuit are multiplexed.

Before introducing the embodiment where the devices of the transmission circuit to be multiplexed, the transmission circuit of the present embodiment will be described first.

The transmission circuit may include a laser diode, a switch device, and a driver.

The laser diode may be a diode such as a positive-intrinsic-negative (PIN) photodiode. The laser diode may emit a laser pulse sequence with a specific wavelength. The laser diode may be referred to as a light source or an emission light source.

The switch device may be a switch device of the laser diode, and may be connected with the laser diode to control on or off of the laser diode. When the laser diode is in the on state, it may emit a laser pulse sequence. When the laser diode is in the off state, it may not emit a laser pulse sequence.

The driver is connected with the switch device for driving the switch device.

According to the invention, the signal for the driver to drive the switch device and the signal for the switch device to control the laser diode are both referred to as drive signal.

Optionally, in one embodiment, the switch device may be a metal-oxide-semiconductor field-effect (MOS) transistor, and the driver may be a MOS driver.

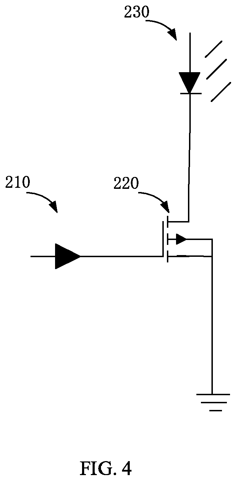

For example, as illustrated in FIG. 4, the transmission circuit includes a MOS driver 210, a MOS transistor 220, and a laser diode 230.

The MOS driver 210 may be configured to drive the MOS transistor 220, and the MOS transistor 220 may be configured to control on or off of the laser diode 230.

It should be understood that in some embodiments, the switch device may be a Gallium Nitride (GaN) transistor and the driver may be a GaN driver.

In the measurement with at least two channels, the transmission circuit includes at least two laser diodes, and different laser diodes can emit laser pulse sequences with different emission paths, to realize the emission of at least two laser pulse sequences.

In the transmission circuit, the drive signals corresponding to the at least two laser pulse sequences share at least one of devices other than the laser diodes included in the transmission circuit. According to the invention, at least one of a switch device and a driver may be multiplexed.

That the drive signals corresponding to at least two laser pulse sequences share at least one of devices other than the laser diodes, may be understood as: the at least two measurement channels may share at least one of devices other than the laser diodes in the transmission circuit.

Specifically, the drive signals corresponding to the at least two laser pulse sequences may share the switch device while not sharing the driver, or share the driver while not sharing the switch device, or share both the switch device and driver.

In one embodiment, the transmission circuit may include a driver and at least two switch devices. The at least two switch devices may be respectively driven by the one driver, and each switch device of the at least two switch device may control corresponding one of the at least two laser diodes corresponding to the at least two laser pulse sequences respectively (that is, the number of MOS transistors is equal to the number of laser diodes, and there is a one-to-one correspondence between MOS transistors and laser diodes). The one driver is in time-sharing connection with the at least two switch devices via a switch or a multiplexer.

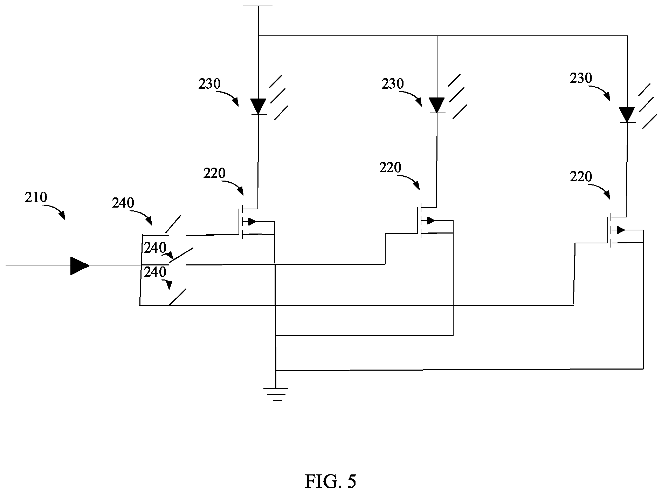

For example, as illustrated in FIG. 5, the at least two MOS transistors 220 may be driven by a MOS driver 210 in a time-sharing manner. Specifically, the at least two MOS transistors 220 may be connected to the MOS driver 210 via switches 240, and each MOS transistor of the at least two MOS transistors 220 may control on or off of corresponding one of the laser diodes 230.

It should be noted that in FIG. 5, the switches 240 is disposed between the MOS driver 210 and the MOS transistors 220. In some other embodiments, the switches 240 may be disposed between the MOS transistors 220 and the laser diodes 230. In some other embodiments, a portion of the switches may be disposed between the MOS driver 210 and the MOS transistors 220, and a remaining portion of the switches 240 may be disposed between the MOS transistors 220 and the laser diodes 230. In one embodiment illustrated in FIG. 5, the at least two switches 240 may be realized by one multiplexer.

Cost, power consumption, and size of switches or multiplexers may be smaller than MOS drivers. Therefore, in the measurement with at least two channels, using a MOS driver to drive the MOS transistors in a time-sharing manner via the switches or multiplexers, cost, power consumption, and size of the laser distance measurement apparatus may be reduced.

According to the invention, the transmission circuit include one driver and on switch device. The drive signals in the transmission circuit that correspond to the at least two laser pulse sequences share the one driver and the one switch device. The one switch device may control at least two laser diodes corresponding to the at least two laser pulse sequences via switches or multiplexers.

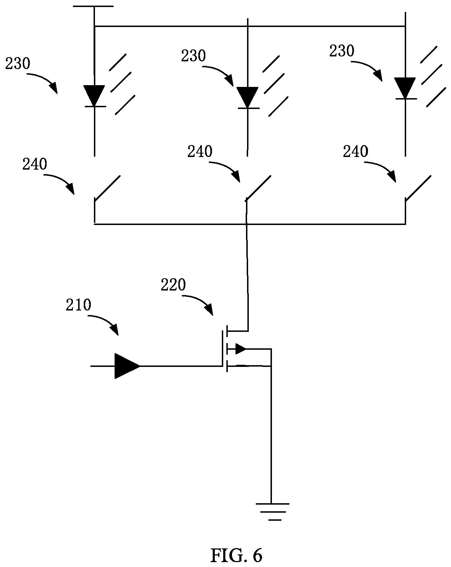

For example, as illustrated in FIG. 6, a MOS driver 210 drives a MOS transistor 220, and the one MOS driver 210 is connected to at least two laser diode 230 in a time-sharing manner via switches 240, to achieve control of on or off of the at least two laser diodes in a time-sharing manner. In one embodiment illustrated in FIG. 6, the at least two switches 240 is realized by one multiplexer.

Costs, power consumptions, and sizes of switches or multiplexers may be smaller than MOS drivers. Therefore, the measurements with at least two channels may share one MOS driver and one MOS transistor, to reduce cost, power consumption, and size of the laser distance measurement apparatus.

After the multiplexing of the devices in the transmission circuit in the measurement with the at least two channels is described, multiplexing the devices in the receiving circuit will be described below.

Before multiplexing the devices in the receiving circuit is described, the receiving circuit will be described first.

The receiving circuit may include a photoelectric conversion device, and the photoelectric conversion device may convert the detected laser pulse sequence into an electrical signal.

Optionally, the photoelectric conversion device may include a PIN diode or an avalanche photodiode.

Optionally, the receiving circuit may include a signal processor, and the signal processor may be configured to amplify and/or filter the electrical signal.

Specifically, the signal processor may include an amplification circuit that may amplify the electrical signal. Specifically, the amplification circuit may perform at least one stage of amplification, and the number of stages of amplification may be determined according to the devices of the sampling circuit.

For example, when the device of the sampling circuit includes an analog-to-digital converter (Analog-to-Digital Converter, ADC), an amplification circuit with one stage or at least two stages may be used for amplification.

For example, when the devices in the sampling circuit include signal comparators (for example, analog comparators (COMP) for converting electrical signal into digital signal) and time-to-data converters (TDC), an amplification circuit with two or more stages may be used for amplification. The TDC may be a TDC chip, or a TDC circuit based on programmable devices such as Field-Programmable Gate Array (FPGA).

Specifically, the above-mentioned signal processor may include a first-stage amplification circuit and a second stage amplification circuit. The first-stage amplification circuit may be used to amplify the electrical signal output from the photoelectric conversion device, and the second-stage amplification circuit may be used to further amplify the electrical signal from the first-stage amplification circuit.

For example, the first-stage amplification circuit may include a transimpedance amplifier, and the second-stage amplifying may include other types of signal amplifiers.

Optionally, the signal processor may include other signal processors other than the amplification circuits, such as a filter circuit for filtering the electrical signal.

It should be understood that the transmission circuit may include an amplification circuit but no other signal processors, or it may include other signal processors but no the amplification circuit, or it may include other signal processors as well as the amplification circuit.

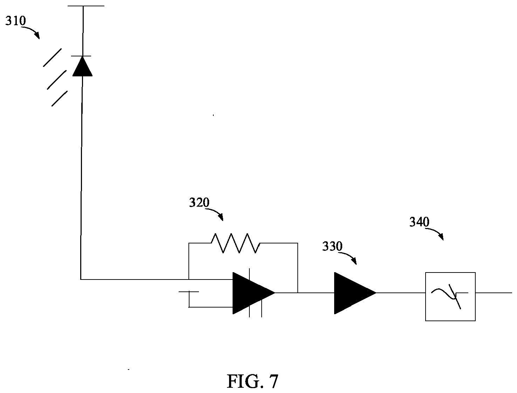

As illustrated in FIG. 7, in one embodiment, the receiving circuit includes APD 310, a transimpedance amplifier 320, other amplification circuits 330 as the second-stage amplifier, and other signal processors 340.

In the measurement with at least two channels, the receiving channel may include at least two photoelectric conversion devices, and each photoelectric conversion device may be used to receive the laser pulse sequence of a corresponding one of the at least two channels and convert the received laser pulse sequence into an electrical signal. Specifically, the at least two photoelectric conversion devices may work in a time-sharing manner, that is, different laser pulse sequences in the at least two laser pulse sequences may arrive at the photoelectric conversion devices at different times.

Optionally, at least two electrical signals may share at least one device of the receiving circuit other than the photoelectric conversion device

Specifically, that the at least two electrical signals may share at least one device other than the photoelectric conversion device in the receiving circuit may be understood as: the at least two measurement channels may share at least one device other than the photoelectric conversion device in the receiving circuit.

Specifically, at least two electrical signals may share at least one device included in the signal processor used to achieve amplification and/or filtering.

For example, the at least two electrical signals may share an amplification circuit and/or a filter circuit.

As shown above, in the receiving circuit, the signal processor may include a first-stage amplification circuit and a second-stage amplification circuit.

Optionally, the at least two electrical signals may share at least one device other than the photoelectric conversion device and the first-stage amplification circuit in the receiving circuit. Since the first-stage amplification circuit is at the front end of the receiving circuit (for example, the first-stage amplification circuit is directly connected to the photoelectric conversion device) and is very sensitive to parasitic capacitance and wiring length. If the first-stage amplification circuit is multiplexed, a switch may be needed to switch these sensor signal, and capacitance brought by the switch and the long-distance wiring may deteriorate the noise parameters and bandwidth.

In one embodiment, the receiving circuit may include at least two transimpedance amplifiers, and each of the at least two transimpedance amplifiers may amplify a corresponding one of the at least two electrical signals. The at least two transimpedance amplifiers may be connected with the next-stage device of the transimpedance amplifiers in a time-sharing manner via signal gating, or via a switch, or via a multiplexer.

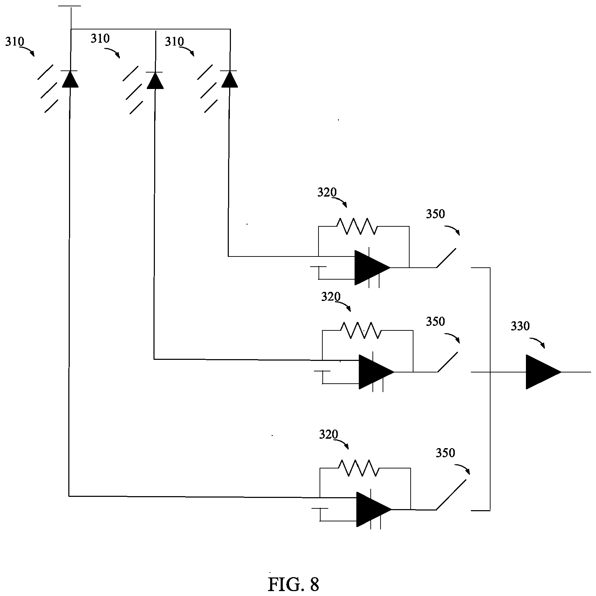

For example, as shown in FIG. 8, the receiving circuit includes at least two APD 310, at least two transimpedance amplifiers 320, and a signal amplification circuit 330. The at least two transimpedance amplifiers 320 is connected to the signal amplification circuit 330 in a time-sharing manner via the switches 350, and the at least two switches 350 is implemented by a multiplexer.

It should be understood that, although the switches 350 are disposed between the transimpedance amplifiers 320 and the signal amplification circuit 330 in FIG. 8, the switches 350 may also be disposed between the APD 310 and the transimpedance amplifiers 320.

Alternatively, a portion of the switches 350 may be disposed between the transimpedance amplifiers 320 and the signal amplification circuit 330, and a remaining portion of the switches 350 may be disposed between the transimpedance amplifiers 320 and the signal amplification circuit 330.

For the switches or multiplexers, costs, power consumptions, and sizes are small. Therefore, in the measurement with the at least two channels, a transimpedance amplifier is connected to other devices via the switches in a time-sharing manner. Correspondingly, cost, size, and power consumption of the laser distance measurement apparatus may be reduced.

Optionally, in the embodiment of the present disclosure, since the transimpedance amplifier itself may be triggered by a pulse signal to turn on or off, when there are at least two transimpedance amplifiers that need to be connected with other devices in a time-sharing manner, they may be connect with other devices via a signal gating manner.

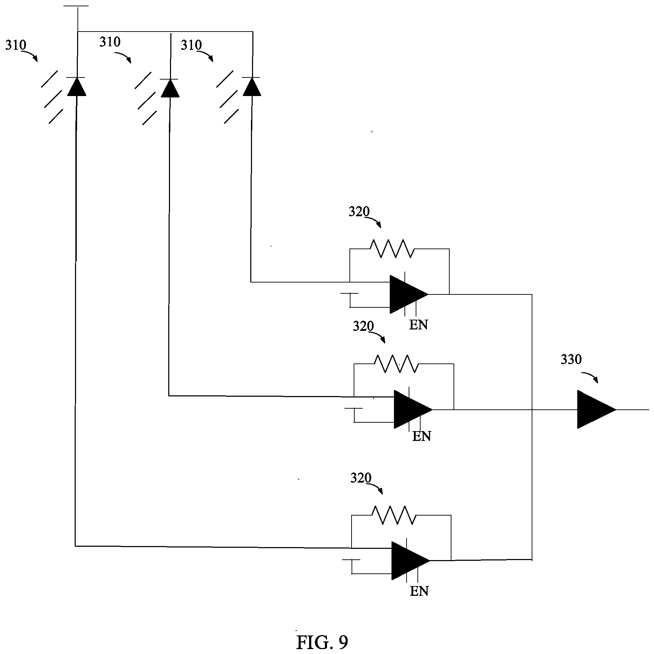

For example, as shown in FIG. 9, the transmission circuit includes at least two APD 310, at least two transimpedance amplifiers 320, and a signal amplification circuit 330. The normal output of a transimpedance amplifier 320 may be enabled (as shown in the figure, inputting enable signal (EN)), and the output of an unenabled transimpedance amplifier may be in a high-impedance state, such that the electrical signal is sent to the subsequent stage for amplification at one time to achieve channel gating and reuse subsequent circuit devices.

Optionally, the receiving circuit may include a transimpedance amplifier, and the at least two photoelectric conversion devices corresponding to the at least two electrical signals may be connected to the one transimpedance amplifier in a time-sharing manner via switches or a multiplexers.

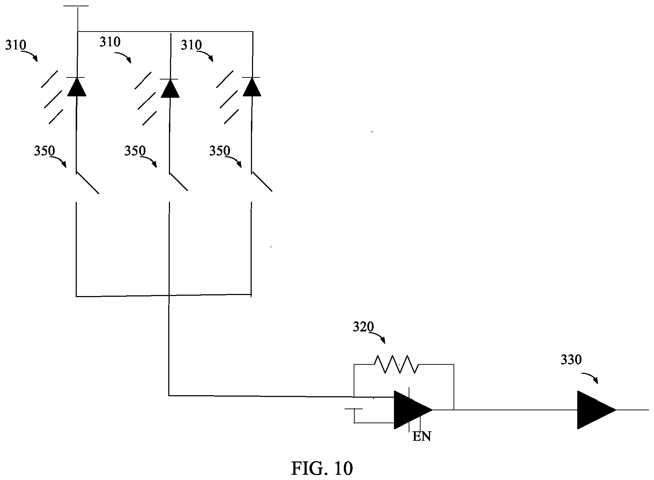

For example, as shown in FIG. 10, the transmission circuit includes at least two APD 310, a transimpedance amplifier 320, and a signal amplification circuit 340. The at least two APD 310 are connected to the transimpedance amplifier in a time-sharing manner via the switches 350 (or a multiplexer).

Although FIG. 10 shows one embodiment where the number of subsequent circuits of the transimpedance amplifier is one when the receiving circuit includes a transimpedance amplifier, it should be understood that the embodiments of the present disclosure are not limited thereto and there may also be at least two subsequent circuits of one type for the transimpedance amplifier to process the at least two electrical signals, respectively.

Optionally, in the embodiment of the present disclosure, in the receiving circuit, the at least two channels of the electrical signal may share at least one of the devices other than the photoelectric conversion device in the receiving circuit and other than device(s) at one or more consecutive stages downstream the photoelectric conversion device. The device(s) at the one or more consecutive stages downstream the photoelectric conversion device may include a next-stage device of the photoelectric conversion device.

That is to say, in the multiplexing of the devices of the receiving circuit, the multiplexing may be performed in a manner that the at least two electrical signals are first split (that is, corresponding to different devices) and then share. Specifically, in the receiving circuit, after the at least two electrical signals share a device, all subsequent devices of the device may be still shared by the at least two electrical signals.

For example, in a receiving circuit including APD, transimpedance amplifiers, other signal amplification circuits and filter circuits, the signal amplification circuits and filter circuits may be multiplexed while the transimpedance amplifiers may not be multiplexed; or, the filter circuits may be multiplexed without multiplexing the transimpedance amplifiers and other signal amplification circuits.

Multiplexing devices in the sampling circuit for the measurement with the at least two channels will be described below.

Before multiplexing devices in the sampling circuit is described, the sampling circuit will be described first.

The sample circuit may be configured to sample the electrical signal from the receiving circuit, and may have two implementations.

In a first implementation, the sampling circuit may include a signal comparator and a time-to-digital converter. Specifically, after the electrical signal from the receiving circuit passes via the signal comparator, the electrical signal may enter the time-to-digital converter, and then the time-to-data converter may output an analog signal to the processing circuit.

In another implementation, the sampling circuit may include an analog-to-digital converter. Specifically, after the analog signal from the receiving circuit to the sampling circuit undergoes analog-to-digital conversion by the ADC, the digital signal may be output to the processing circuit.

Optionally, in the embodiments of the present disclosure, the sampling circuit may be implemented by a programmable device. The programmable device may be a Field-Programmable Gate Array (FPGA), an Application Specific Integrated Circuit (ASIC), or a complex programmable logic device (CPLD). The programmable device may include a port, and the signal output by the receiving circuit may be input to a device for sampling via the port, such as an ADC or a signal comparator.

Optionally, if the TDC is a TDC circuit based on a programmable device including a FPGA, the comparator may be disposed on the FPGA or not on the FPGA.

It should be understood that in the present embodiment, the signal comparator is classified as a sampling circuit. However, it should be understood that in other embodiments of the present application, the signal comparator may be classified as a device included in the receiving circuit.

Optionally, in the embodiments of the present application, in the measurement with the at least two channels, it may realize that the at least two electrical signals arrive at the sampling circuit in a time-sharing manner. This is because the at least two channels of laser pulse sequences are emitted at different times and they may arrive at the sampling circuit at different times. Since the at least two electrical signals arrive at the sampling circuit in a time-sharing manner, multiplexing of at least one device of the sampling circuit may be realized.

Specifically, the at least two electrical signals may share at least one of the signal comparator and the TDC, or share the ADC.

When the sampling circuit is implemented on a programmable device, signal selection may be implemented inside the programmable device to achieve the purpose of multiplexing the sampling circuit. For example, on the programmable device FPGA, when the signal is collected by the signal comparator and TDC sampling method, the signal of each measurement channel may be connected to the FPGA from different ports, and then a signal is selected inside the FPGA. Subsequently, the signal comparator and TDC may be used to sample. This method does not require additional switches or multiplexers.

Alternatively, at least two ports may be connected to the signal comparator or ADC via switches or multiplexers respectively in a time-sharing manner.

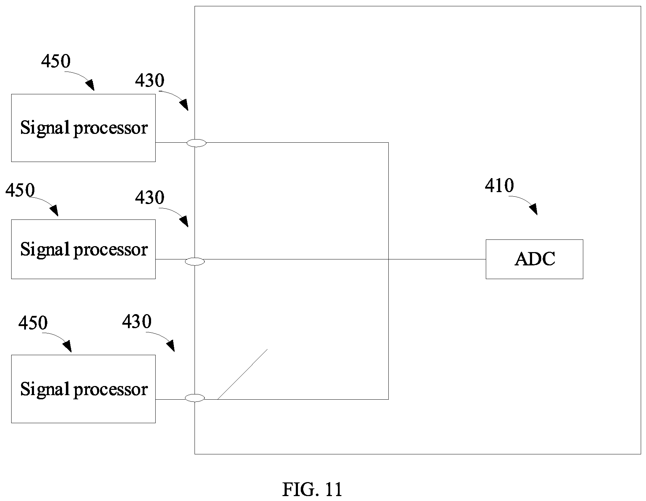

For example, as illustrated in FIG. 11, in FPGA, each electrical signal in the at least two electrical signals has a corresponding port 430. The ports 420 are connected to ADC 410 in a time-sharing manner. The electrical signal is processed by the signal processor 450 in the receiving circuit and then may be inputted to the ADC 410 via the corresponding ports.

In the embodiment illustrated in FIG. 11, a number of devices in the sampling circuit and connected to ADC directly is two (that is, the devices connected directly are not multiplexed), for example, includes two signal processors 450. Different signal processors 450 may be connected to the same ADC via different ports.

In some other embodiments, a last device in the receiving circuit and connected to the sampling circuit directly may be multiplexed, and correspondingly there may be only one port and the at least two channels of the electrical signal may be outputted to the sampling circuit via the one port.

Of course, in some other embodiments, a last device in the receiving circuit and connected to the sampling circuit directly may be multiplexed, and there may be at least two ports that correspond to the at least two channels of the electrical signal in a one-to-one correspondence.

Optionally, in one embodiment of the present disclosure, at least one or more devices in the sampling circuit in each channel and at least one or more devices in the processing circuit in each channel may be implemented by a same programmable device. That is, at least one or more devices in the sampling circuit in each channel and at least one or more devices in the processing circuit in each channel may be integrated into a same programmable device, and the programmable device may be multiplexed.

Specifically, each channel of the electrical signal in the at least two channels of the electrical signal may be transmitted to the programmable device via a corresponding one of the at least two ports respectively.

In one embodiment, at least one or more devices in the sampling circuit in each channel and at least one or more devices in the processing circuit in each channel may be integrated into a same FPGA or ASCI.

The present disclosure also provides a laser distance measurement device. The laser distance measurement device may include:

A transmission circuit, configured to emit at least two laser pulse sequences where the at least two laser pulse sequences may be emitted at different time along different emission paths;

A receiving circuit, configured to receive each laser pulse sequence reflected by an object to be detected and perform photoelectric conversion on the each laser pulse sequence to obtain each electrical signal in at least two electrical signals;

A sampling circuit, configured to sample each electrical signal to obtain sampling results; and

A processing circuit, configured to determine a distance to the object to be detected according to the sampling results.

Drive signals in the transmission circuit that correspond to the at least two laser pulse sequences may share at least one of devices in the receiving circuit, and/or

The at least two electrical signals may share at least one of: at least one of devices in the receiving circuit, at least one of devices in the sampling circuit, at least one of devices in the processing circuit, and emission of the laser pulse sequences corresponding to the at least two electrical signals at different time.

It should be understood that the at least two laser pulse sequences with different emission paths may mean that: the transmission circuit may include two laser diodes and may be capable of emitting the laser pulse sequences with the at least two emission paths; or the transmission circuit may include one laser diode to emit the laser pulse sequences with one emission path and the laser pulse sequences with the one emission path may be adjusted by optical elements to form the laser pulse sequences with the at least two emission paths.

Optionally, in one embodiment of the present disclosure, the drive signals or the at least two electrical signals corresponding to the at least two laser pulse sequences may share a first device.

The laser detection device may further include a selection device. The selection device may be configured to connect at least two second devices to the first device in a time-sharing manner. Each of the at least two second devices may correspond to a drive signal or an electrical signal corresponding to a corresponding laser pulse sequence.

Specifically, in one embodiment of the laser distance measurement apparatus, the first device may be multiplexed, and the second devices which are needed to be connected to the first device may not be multiplexed. In this situation, a number of the first device may be 1, and a number of the second devices may be at least two. Correspondingly, the selection device may be configured to connect at least two second devices to the first device in a time-sharing manner.

The selection device may include one of switches, multiplexers, or ports.

It should be understood that the first device and the second devices may be connected directly (that is, there may be no other devices between the first device and the second devices) or indirectly (that is, other devices may be connected between the first device and the second devices).

Optionally, in one embodiment of the present application, the drive signals or the at least two electrical signals corresponding to the at least two laser pulse sequences may share a third device, and at least two fourth devices may be connected to the third device in a signal gating manner (also referred to as an enabling manner) in a time-sharing manner. Each fourth device may correspond to a laser pulse sequence or an electrical signal.

Specifically, in one embodiment of the laser distance measurement apparatus, the third device may be multiplexed, and the fourth devices which are needed to be connected to the third device may not be multiplexed. In this situation, a number of the third device may be 1, and a number of the fourth devices may be at least two. The first device and the second device need to be connected. Correspondingly, the one third device may be connected with multiple fourth devices in a time-sharing manner in a signal gating manner.

If this implementation method is adopted, it is required that the third device itself can be triggered by a pulse signal to open or close. For example, the third device may be a TransImpedance Amplifier (TIA).

Optionally, in one embodiment of the present disclosure illustrated in FIG. 1, the laser distance measurement device further includes a control device. The control device may be configured to control the transmission circuit, the receiving circuit, the sampling circuit, and the processing circuit. The control device may include multiplexed control logic. Specifically, in the measurement with the at least two channels, switching between each channel may be achieved to ensure that each channel can operate normally and does not interfere with each other.

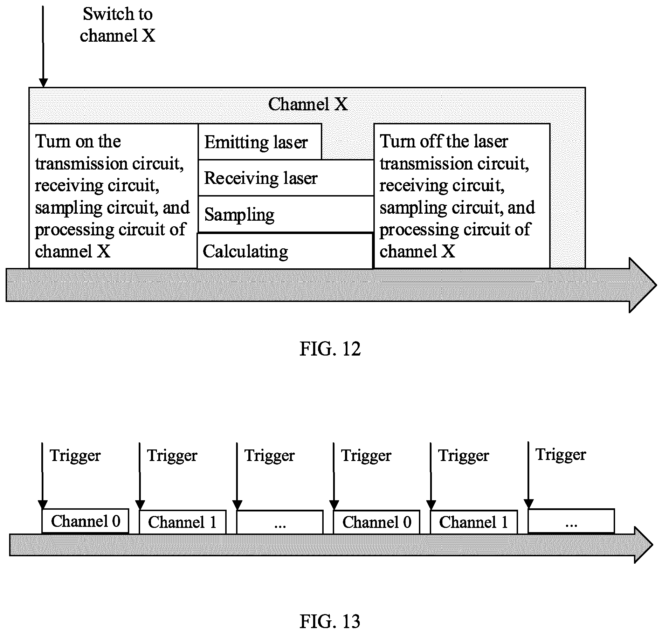

FIG. 12 illustrates a timing diagram of control state of each circuit when the laser distance measurement device switches to one of the channels to start working.

In FIG. 12, the transmission circuit, the receiving circuit, the sampling circuit, and the processing circuit in a channel X are selected to turn on, and each circuit starts working. Then, the transmission circuit, the receiving circuit, the sampling circuit, and the processing circuit in the channel X are turned off. It should be understood that when devices in one of the circuits are used by at least two channel, the devices or the one of the circuits may not be turned off when one of the channels finishes the measurement such that the devices of the one of the circuits could be used for the measurement of the next channel.

It should be understood that FIG. 12 illustrates an embodiment where the transmission circuit, the receiving circuit, the sampling circuit, and the processing circuit start working simultaneously as an example only, and should not limit the scopes of the present disclosure. The various embodiments of the present disclosure may use other implementation.

For example, in one embodiment, the starting time of the transmission circuit, the receiving circuit, the sampling circuit, and the processing circuit in a specific channel may be different.

Optionally, the transmission circuit and the receiving circuit may both be turned on sometime before the transmission to reserve a period of time for the transmission circuit and the receiving circuit to enter a stable state.

Similarly, the sampling circuit, and the processing circuit may both be turned on some time before a time point when the operation is expected to start, rather than turn on when the operation is expected to start.

Optionally, for a specific measurement channel, a certain circuit may process signal of other measurement channels before the certain circuit starts for the specific measurement channel, even if the previous circuits of the specific measurement channel has started to work.

For example, after the transmission circuit emits the laser pulse sequence with an emission path and before the receiving circuit receiving the laser pulse sequence with the emission path, the electrical signal corresponding to the laser pulse sequences with other emission paths.

Optionally, in the various embodiments of the present disclosure, methods that the control device controls other circuits may include the following two implementation manners.

In one implementation, the control device may send trigger signal to the transmission circuit, the receiving circuit, the sampling circuit, and the processing circuit for each laser pulse sequence of the at least two laser pulse sequences, respectively. Among it, the transmission circuit, the receiving circuit, the sampling circuit and the processing circuit may perform corresponding processing on a laser pulse sequence based on the trigger signal.

That is, the control device may send a set of trigger signal (including trigger signal for the transmission circuit, receiving circuit, adopting circuit, and processing circuit) to trigger the measurement of one channel. To achieve the measurement with the at least two channels, multiple sets of trigger signal may be sent.

For example, as illustrated in FIG. 13, the trigger signal for each of the at least two channels may be sent respectively to trigger the measurement of the one of the at least two channels. That is, each trigger may only achieve the operation of only one channel, and another channel may be switched at a next trigger. Trigger frequency may be allocated to each channel evenly.

In another implementation, for the at least two laser pulse sequences, a trigger signal may be sent to the transmission circuit, the receiving circuit, and the sampling circuit respectively. And after performing processing corresponding to another laser pulse sequence, the transmission circuit, the receiving circuit and the sampling circuit may perform processing corresponding to another laser pulse sequence based on the one-time trigger signal.

That is, the control device may send a set of trigger signal (including trigger signal for the transmission circuit, receiving circuit, adopting circuit, and processing circuit) to trigger the measurement with the at least two channels. To achieve the measurement with the at least two channels, at least two sets of trigger signal may be sent.

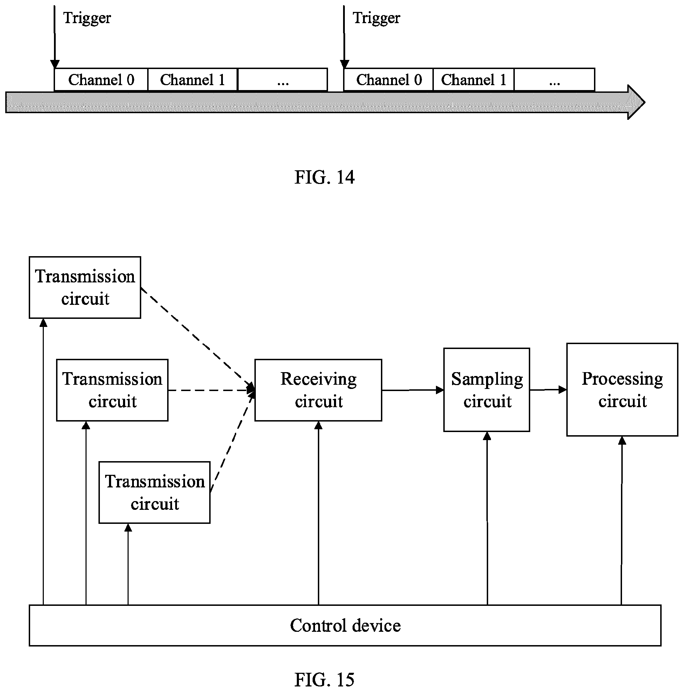

For example, as shown in Figure 14, for each trigger, the work of each channel is realized in sequence. After one of the channels is finished, immediately or after a period of time, another channel is switched to start working. The working frequency of each channel is same as the trigger frequency.

Optionally, in the embodiment of the present disclosure, in the measurement with the at least two channels, the multiplexed devices may belong to one or more of the transmission circuit, the receiving circuit, the sampling circuit, and the processing circuit

For example, in the measurement with the at least two channels, only the devices in the transmission circuit are multiplexed.

For example, in the measurement with the at least two channels, the devices in the receiving circuit, sampling circuit, and processing circuit are multiplexed, as shown in Figure 15.

For another example, in the measurement with the at least two channels, the devices of the transmission circuit, the components of the receiving circuit, the components of the sampling circuit, and the components of the processing circuit are all multiplexed.

Multiplexing the drive signals corresponding to at least two laser pulse sequences, or the electrical signals corresponding to the at least two laser pulse sequences are illustrated in the above embodiments. The combination of the devices in the channels corresponding to the at least two laser pulse sequences may be referred to as a first circuit group, which includes the aforementioned transmission circuit, receiving circuit, sampling circuit, and processing circuit.

The at least two laser pulse sequences mentioned above may be all or a portion of the laser pulse sequences emitted by the laser distance measurement device.

For example, the laser distance measurement device may emit six laser pulse sequences, and the drive signals of the six laser pulse sequences may share at least one device.

For example, the laser distance measurement device may emit six laser pulse sequences. For three laser pulse sequences, the drive signals may share at least one device with each other. The drive signals corresponding to the other three laser pulse sequences may share devices with each other, or may not share devices.

And, the above-mentioned at least two electrical signals may be electrical signal corresponding to all or a portion of the at least two laser pulse sequences emitted by the laser distance measurement device.

For example, the laser distance measurement device may emit six laser pulse sequences. After photoelectric conversion, six electrical signal may be obtained. Three of the six electrical signal may share at least one device with each other. And the other three laser pulse sequences may share devices with each other, or may not share devices.

Optionally, in one embodiment of the present disclosure, besides the first circuit group mentioned above, the laser distance measurement device may further include a second circuit group. The second circuit group may include:

A transmission circuit, configured to emit at least two laser pulse sequences at different times along different emission paths;

A receiving circuit, configured to receive each laser pulse sequence emitted by the transmission circuit in the second circuit group and reflected by an object to be detected, and perform photoelectric conversion on the each laser pulse sequence to obtain each electrical signal in at least two electrical signals;

A sampling circuit, configured to sample each electrical signal obtained by the receiving circuit in the second circuit group, to obtain sampling results; and

A processing circuit, configured to determine a distance to the object to be detected according to the sampling results obtained by the processing circuit in the second circuit group.

It should be understood that the types of devices included in each circuit in the second circuit group and/or the connection relationship of various types of devices may be the same as those of the first circuit group. For brevity, details are not repeated here.

Optionally, the number of laser pulse sequences emitted by the first circuit group and the number of laser pulse sequences emitted by the second circuit group may be the same or different.

The emission paths of the laser pulse sequences corresponding to the first circuit group may be different from the emission paths of the laser pulse sequences corresponding to the second circuit group.

Optionally, the emission directions of the laser pulse sequences corresponding to the first circuit group may be different from the emission directions of the laser pulse sequences corresponding to the second circuit group.

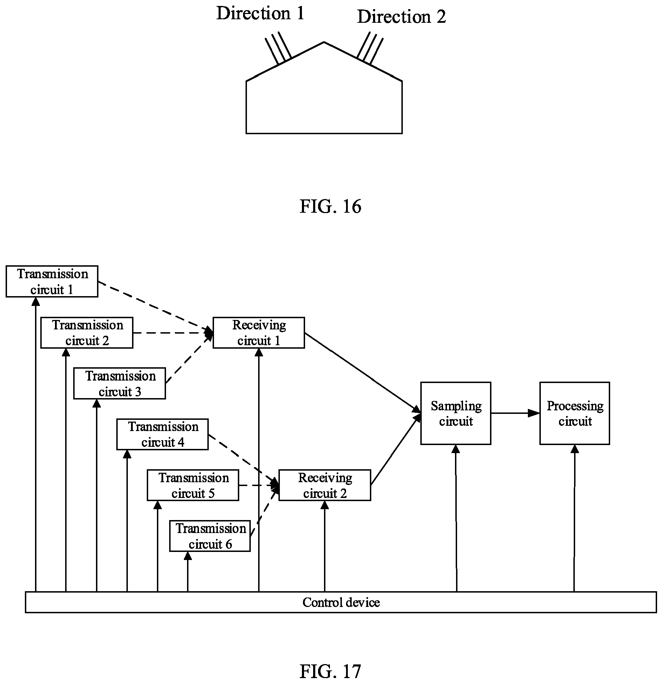

For example, as illustrated in FIG. 16, the laser pulse sequences have two emission directions, and each emission direction is achieved by one circuit group.

Optionally, in the embodiment of the present disclosure, device multiplexing may be implemented in both the first circuit group and the second circuit group. Or only one circuit group of the first circuit group and the second circuit group may implement device multiplexing.

In the case where device multiplexing is implemented in both the first circuit group and the second circuit group, the types of the devices being multiplexed in the first circuit group may be same as the types of the devices being multiplexed in the second circuit group.

For example, for both the first circuit group and the second circuit group the switching devices in the transmission circuits, the secondary amplifiers of the receiving circuits, and the sampling circuits may be multiplexed in the group.

For example, for both the first circuit group and the second circuit group devices of a same type may be multiplexed in the group. For example, as illustrated in FIG. 17, for each circuit group of the first circuit group (including the transmission circuit 1, the transmission circuit 2, the transmission circuit 3, the receiving circuit 1, the sampling circuit and the processing circuit, and corresponding to the laser pulse sequence with direction 1) and the second circuit group (including the transmission circuit 4, the transmission circuit 5, the transmission circuit 6, the receiving circuit 2, the sampling circuit and the processing circuit, and corresponding to the laser pulse sequence with direction 1), devices in the receiving circuit, the sampling circuit and the processing circuit are multiplexed in the group.

In some other embodiments, in the case where device multiplexing is implemented in both the first circuit group and the second circuit group, the types of the devices being multiplexed in the first circuit group may be different from the types of the devices being multiplexed in the second circuit group. The difference may mean a portion or all are different.

For example, the first circuit group may multiplex the switching device in the transmission circuit, the secondary amplifier of the receiving circuit, and the sampling circuit in the group; the first circuit group may multiplex the switching devices in the transmission circuit, the secondary amplifier and other signal processor in the receiving circuit in the group. For another example, the first circuit group may multiplex the switching device in the transmission circuit in the group; the first circuit group may multiplex the secondary amplifier of the receiving circuit and other signal processors in the group.

The above describes the multiplexing of the devices in each circuit group. In the embodiment of the present disclosure, device multiplexing may also be implemented between at least two circuit groups.

Specifically, at least one of the receiving circuit, the transmission circuit, the sampling circuit, and the processing circuit may be multiplexed between the at least two circuit groups.

For example, the first circuit group and the second circuit group may share one or more devices of the sampling circuit and/or one or more devices of the processing circuit. For example, as shown in FIG. 17, the sampling circuit and the processing circuit are multiplexed between the first circuit group and the second circuit group.

Specifically, switches, multiplexers or ports may be used to connect the receiving circuit of the first circuit group and the receiving circuit of the second circuit group to the sampling circuit in a time-sharing manner.

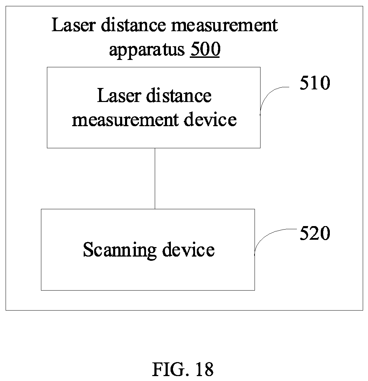

Besides the laser distance measurement device, the present disclosure also provides a laser distance measurement apparatus. As illustrated in FIG. 18, in one embodiment, the laser distance measurement apparatus 500 includes a laser distance measurement device 510.

The laser distance measurement apparatus 500 may further include other devices such as a scanning device 520. The scanning device 520 may be configured to make the laser pulse sequences emitted by the laser distance measurement device 510 change the propagation direction and be emitted. At least a portion of the light beam reflected by the object to be detected may incident on the laser distance measurement device 510 after passing through the scanning device 520.

Specifically, the scanning device 520 may include at least one prism whose thickness changes in the radial direction, and a motor for driving the prism to rotate. The rotating prism may be configured to refract the laser pulse sequences emitted by the laser distance measurement device to different directions to be emitted.

In this case, the laser tube of the transmission circuit included in the laser distance measurement device 510 in the embodiment of the present disclosure may be one laser tube, and the laser pulse sequences emitted by the laser tube may be changed by the scanning device 520 to change the emission path to obtain the laser pulse sequences with multiple emission paths.

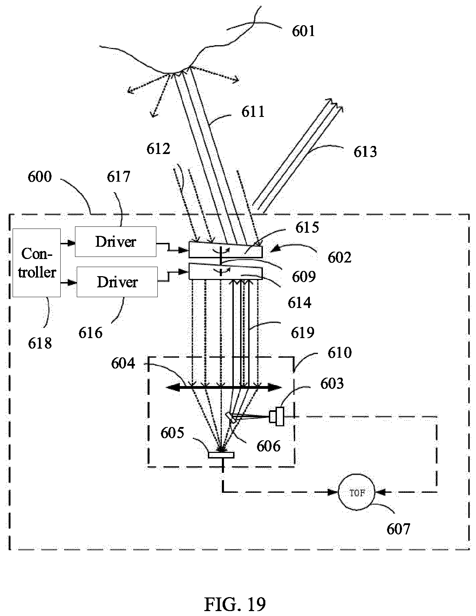

The following will take any laser distance measurement apparatus as an example to describe the working principle of the laser distance measurement apparatus in detail. A coaxial optical path may be used in the laser distance measurement apparatus, that is, the beam emitted by the laser distance measurement apparatus and the reflected beam may share at least a portion of the optical path in the laser distance measurement apparatus. Alternatively, the laser distance measurement apparatus may also use an off-axis optical path, that is, the light beam emitted by the laser distance measurement apparatus and the reflected light beam may be respectively transmitted along different optical paths in the laser distance measurement apparatus. Fig. 19 shows a schematic diagram of a laser distance measurement apparatus according to an embodiment of the present disclosure.

The laser distance measurement apparatus 600 includes an optical transceiver device 610 which includes a transmission circuit 603, a collimator 604, a detector 605 (which may include a receiving circuit, a sampling circuit, and a processing circuit), and an optical path changing element 606. The optical transceiver 610 is used to transmit a light beam, receive the returned light, and convert the returned light into an electrical signal. The transmission circuit 603 is used to emit a light beam. In one embodiment, the transmission circuit 603 may emit a laser beam. Optionally, the laser beam emitted by the transmission circuit 603 may be a narrow-bandwidth beam with a wavelength outside the visible light range. The collimator 104 is arranged on the emission light path of the transmission circuit, and is used to collimate the light beam emitted from the transmission circuit 603 for collimating the light beam emitted from the transmission circuit 603 into parallel light. The collimator is also used to condense at least a part of the return light reflected by the object to be detected. The collimator 604 may be a collimating lens or other elements capable of collimating a light beam.

The laser distance measurement apparatus 600 further includes a scanning device 602. The scanning device 602 is disposed on the exit light path of the optical transceiver 610. The scanning device 602 is used to change the transmission direction of the collimated beam 619 emitted by the collimator 604 to project it to the external environment, and project the return light to the collimator 604. The returned light is collected by the detector 605 via the collimator 604.

In an embodiment, the scanning device 602 may include one or more optical elements, such as a lens, a mirror, a prism, a grating, an optical phased array, or any combination of the foregoing optical elements. In some embodiments, the one or more optical elements of the scanning device 602 may be capable to rotate around a common axis 609, and each rotating optical element may be used to continuously change the propagation direction of the incident light beam. In one embodiment, the one or more optical elements of the scanning device 602 may rotate at different rotation speeds. In another embodiment, the one or more optical elements of the scanning device 602 may rotate at substantially the same rotation speed.

In some embodiments, the one or more optical elements of the scanning device 602 may also rotate around different axes, or vibrate in the same direction, or vibrate in different direction. The present disclosure has no limit on these.

In one embodiment, the scanning device 602 may include a first optical element 614 and a driver 616 connected to the first optical element 614. The driver 616 may be configured to drive the first optical element 614 to rotate around the rotation axis 609 such that the first optical element 614 changes a direction of the collimated light beam 619. The first optical element 614 may project the collimated light beam 619 to different directions. In one embodiment, the angle between the direction of the collimated light beam 619 being changed by the first optical element and the rotation axis 609 may change as the first optical element 614 rotates. In one embodiment, the first optical element 614 may include a pair of opposed non-parallel surfaces and the collimated light beam 619 may transmit through the surfaces. In one embodiment, the first optical element 614 may include a prism whose thickness varies along at least one radial direction. In one embodiment, the first optical element 614 may include a wedge-angle prism configured to refract the collimated light beam 619. In one embodiment, the first optical element 614 may be coated with an anti-reflection coating, and the thickness of the anti-reflection coating may be equal to the wavelength of the light beam emitted by the transmission circuit 603, which can increase the intensity of the transmitted light beam.

In one embodiment, the scanning device 602 may further include a second optical element 615 and the second optical element 615 may rotate around the rotation axis 609. The rotation speed of the second optical element 615 may be different from the rotation speed of the first optical element 614. The second optical element 615 may be configured to change the direction of the light beam projected by the first optical element 614. In one embodiment, the second optical element 615 may be connected to another driver 617, and the driver 617 may drive the second optical element 615 to rotate. The first optical element 614 and the second optical element 615 may be driven by different drivers, such that the rotation speed of the first optical element 614 and the second optical element 615 are different and the collimated light beam 619 is projected to different directions in the external space, which can scan a larger space range. In one embodiment, a controller 618 may control the drivers 616 and 617 to drive the first optical element 614 and the second optical element 615, respectively. The rotational speeds of the first optical element 614 and the second optical element 615 may be determined according to the expected scanning area and pattern in actual applications. The drivers 616 and 617 may include motors or other drivers.

In one embodiment, the second optical element 615 may include a pair of opposite non-parallel surfaces through which the light beam passes. In one embodiment, the second optical element 615 may include a prism whose thickness varies along at least one radial direction. In one embodiment, the second optical element 615 may include a wedge prism. In one embodiment, the second optical element 615 may be coated with an anti-reflection coating to increase the intensity of the transmitted light beam.

The rotation of the scanning device 602 may project light to different directions, such as directions 611 and 613, such that the space around the distance measuring apparatus 600 is scanned. When the light 611 projected by the scanning device 602 incident at the object to be detected 601, a part of the light may be reflected by the object to be detected 601 to the distance measurement apparatus 600 in a direction opposite to the projected light 611. The scanning device 602 may receive the return light 612 reflected by the object to be detected 601 and project the return light 612 to the collimator 604.

The collimator 604 may converge at least a part of the return light 612 reflected by the object to be detected 601. In one embodiment, an anti-reflection coating may cover the collimator 604 to increase the intensity of the transmitted light beam. The detector 605 and the transmission circuit 603 may be placed on the same side of the collimator 604, and the detector 605 may be used to convert at least part of the return light passing through the collimator 604 into an electrical signal.

In some embodiments, the transmission circuit 603 may include a laser diode, by which nanosecond laser light is emitted. For example, the laser pulse emitted by the transmission circuit 603 lasts for 10 ns. Further, the laser pulse receiving time can be determined. For example, the laser pulse receiving time can be determined by detecting the rising edge time and/or the falling edge time of the electrical signal pulse. In this way, the laser distance measurement apparatus 600 can calculate the TOF using the pulse receiving time information and the pulse sending time information, to determine the distance between the object to be detected 601 and the laser distance measurement apparatus 600.

The distance and orientation detected by the laser distance measurement apparatus 100 can be used for remote sensing, obstacle avoidance, surveying and mapping, modeling, navigation, and the like.

The present disclosure also provides a laser distance measurement method. The laser distance measurement method may use a laser distance measurement apparatus provided by any above embodiments to measure a distance between the laser distance measurement apparatus and the object to be detected.

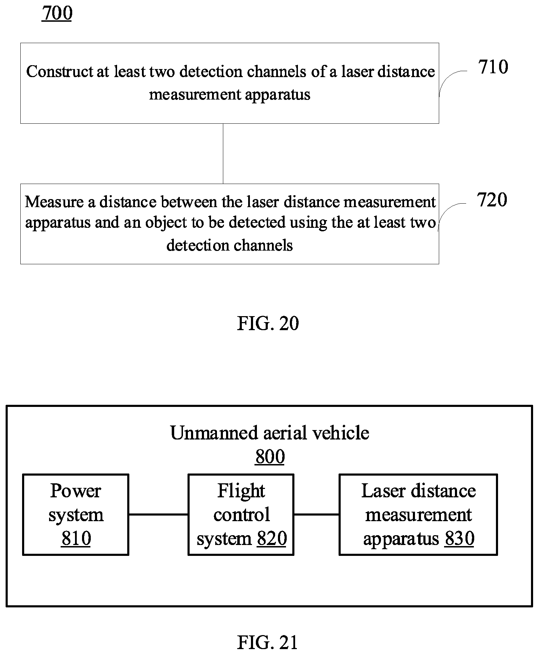

In one embodiment as illustrated in FIG. 20, the laser distance measurement method 700 includes at least a portion of following steps.

In 710, at least two detection channels of the laser distance measurement apparatus are constructed and each detection channel includes a light source, a photoelectric conversion device, a sampling circuit, and a processing circuit. The light source is used to emit a laser pulse sequence, and the photoelectric conversion device is used to receive the laser pulse sequence reflected by the object to be detected, and perform photoelectric conversion on the laser pulse sequence to obtain an electrical signal. The sampling circuit is used to sample the one electrical signal respectively to obtain the sampling result. The processing circuit is used to determine the distance between the laser distance measurement apparatus and the detected object based on the sampling result. The laser pulse sequences emitted by the at least two detection channels have different emission paths, and the at least two detection channels emit laser pulse sequences at different times respectively. One or more devices in the two detection channels except for the light source and the photoelectric conversion device may be multiplexed in a time-sharing manner. According to the invention, at least one device of the transmission circuit other than the light source and/or at least one device of the receiving circuit other than the photoelectric converter is multiplexed.

In 720, the distance between the laser distance measurement apparatus and the object to be detected is measured using the at least two detection channels.

In the method 700, the manner of performing multiplexing in a time-sharing manner on one or more devices in the two detection channels except for the light source and the photoelectric conversion device can refer to the above description. For a brief purpose, this will not be repeated here.

The embodiment of the present disclosure also provides a mobile platform including a laser distance measurement apparatus provided by various embodiments described above. The mobile platform may be an unmanned aerial vehicle, a car, or a robot. Optionally, the car may include an autonomous driving car or a semi-automatic driving car.

As shown in FIG. 21, the unmanned aerial vehicle 800 may include a power system 810, a flight control system 820, and a laser distance measurement apparatus 830.

The laser distance measurement apparatus 830 may correspond to the laser distance measurement apparatus mentioned above, and for the sake of brevity, it will not be repeated here.

It should be understood that the laser distance measurement apparatus 830 and the flight control system 820 may not be strictly physically separated.

## Claims

1. A laser distance measurement device (100, 510), comprising:
a transmission circuit (110, 603), configured to emit at least two laser pulse sequences, wherein the at least two laser pulse sequences have different emission paths and the at least two laser pulse sequences are emitted at different times;
a receiving circuit (120), configured to receive each laser pulse sequence of the at least two laser pulse sequences reflected by an object to be detected and perform photoelectric conversion on each received laser pulse sequence to obtain each electrical signal of at least two electrical signals;
a sampling circuit (130), configured to sample each electrical signal to obtain sampling results;
a processing circuit (140), configured to determine a distance to the object to be detected according to the sampling results, wherein:
drive signals in the transmission circuit (110, 603) that correspond to the at least two laser pulse sequences share at least one multiplexed device of the transmission circuit (110, 603),
wherein the drive signals include a signal for a driver (210) to drive a switch device (240) of a laser diode (230) and a signal for the switch device (240) to control the laser diode (230), and wherein the at least one multiplexed device is at least one of the switch device (240) and the driver (210).

2. The laser distance measurement device (100, 510) according to claim 1, wherein the transmission circuit (110, 603) includes at least two laser diodes (230) and each of the two laser diodes (230) is configured to emit one corresponding laser pulse sequence, preferably
wherein:
the drive signals in the transmission circuit (110, 603) that correspond to the at least two laser pulse sequences share at least one device of the transmission circuit (110, 603) except for the laser diodes (230), preferably
wherein:
the at least one shared multiplexed device of the transmission circuit includes switching devices of the laser diodes (230) or drivers (616, 617) of the switching devices;
the switching devices are connected to the laser diodes (230) to control on or off of the laser diodes (230); and
the drivers (616, 617) are connected to the switching devices to drive the switching devices.

3. The laser distance measurement device (100, 510) according to any one of claims 1-2, wherein:
the receiving circuit (120) includes at least two photoelectric conversion devices; and
each photoelectric conversion device is configured to receive one laser pulse sequence and convert the received laser pulse sequence to electrical signal.

4. The laser distance measurement device (100, 510) according to claim 3, wherein:
the at least two electrical signals share at least one device of the receiving circuit (120) except for the photoelectric conversion devices, preferably
wherein:
the receiving circuit (120) further includes a signal processor (340, 450) configured to perform at least one processing including amplifying or filtering on the electrical signal output from the photoelectric conversion devices;
the at least two electrical signals share at least one device of the signal processor (340, 450).

5. The laser distance measurement device (100, 510) according to claim 4, wherein:
the receiving circuit (120) includes at least two transimpedance amplifiers (320);
each transimpedance amplifier (320) of the at least two transimpedance amplifiers (320) amplifies a corresponding electrical signal of the at least two electrical signals;
the at least two transimpedance amplifiers (320) are connected to next-stage devices of the transimpedance amplifiers (320) in a time-sharing manner via signal gating, switches (240, 350), or multiplexers,
or
wherein:
the receiving circuit (120) includes one transimpedance amplifier (320); and
the at least two photoelectric conversion devices are connected to the one transimpedance amplifier (320) in a time-sharing manner via switches (240, 350) or multiplexers.

6. The laser distance measurement device (100, 510) according to any one of claims 4-5, wherein:
the at least two electrical signals share at least one device of the receiving circuit (120) except for the photoelectric conversion devices and except for one or more devices at one or more consecutive stages downstream the photoelectric conversion devices, wherein the device(s) at the one or more consecutive stages downstream the photoelectric conversion devices include next-stage devices of the photoelectric conversion devices.

7. The laser distance measurement device (100, 510) according to any one of claims 1-6, further comprising a control device, wherein:
the control device is configured to send trigger signals to the transmission circuit (110, 603), the receiving circuit (120), the sampling circuit (130), and the processing circuit (140), respectively, for each laser pulse sequence of the at least two laser pulse sequences; and
the transmission circuit (110, 603), the receiving circuit (120), the sampling circuit (130), and the processing circuit (140) performs corresponding processing on one laser pulse sequence of the at least two laser pulse sequences based on the trigger signals, respectively.

8. The laser distance measurement device (100, 510) according to any one of claims 1-7, further comprising a control device, wherein:
the control device is configured to send trigger signal to the transmission circuit (110, 603), the receiving circuit (120), the sampling circuit (130), and the processing circuit (140) once for the at least two laser pulse sequences;
the transmission circuit (110, 603), the receiving circuit (120), the sampling circuit (130) and the processing circuit (140) may perform processing corresponding to one laser pulse sequence of the at least two laser pulse sequences based on the trigger signal and then perform processing corresponding to another laser pulse sequence of the at least two laser pulse sequences.

9. The laser distance measurement device (100, 510) according to any one of claims 1-8, wherein:
the at least two laser pulse sequences or the at least two electrical signals share a first device; and
the laser detection device includes a selection device, wherein the selection device is configured to connect at least two second devices to the first device in a time-sharing manner and each of the at least two second devices corresponds to a corresponding one of the at least two laser pulse sequences or a corresponding one of the at least two electrical signals, preferably wherein the selection device includes at least one of a switch (240, 350), a multiplexer, or a port (420, 430).

10. The laser distance measurement device (100, 510) according to any one of claims 1-9, wherein:
the at least two laser pulse sequences or the at least two electrical signals share a third device; and
at least two fourth devices are connected to the first device in a time-sharing manner via signal gating and each of the at least two fourth devices corresponds to a corresponding one of the at least two laser pulse sequences or a corresponding one of the at least two electrical signals.

11. The laser distance measurement device (100, 510) according to any one of claims 1-10, wherein:
the transmission circuit (110, 603), the receiving circuit (120), the sampling circuit (130), and the processing circuit (140) belong to a first circuit group of the laser distance measurement device (100, 510); and
the laser distance measurement device (100, 510) further includes a second circuit group, wherein the second circuit group includes:
a transmission circuit (110, 603), configured to emit at least two laser pulse sequences, wherein the at least two laser pulse sequences have different emission paths and the at least two laser pulse sequences are emitted at different times;
a receiving circuit (120), configured to receive and perform photoelectric conversion on each laser pulse sequence from the transmission circuit (110, 603) in the second circuit group and reflected by an object to be detected, to obtain each electrical signal of at least two electrical signals;
a sampling circuit (130), configured to sample each electrical signal from the receiving circuit (120) in the second circuit group, to obtain sampling results; and
a processing circuit (140), configured to determine a distance to the object to be detected according to the sampling result from the processing circuit (140) in the second circuit group,
wherein for each circuit group of the first circuit group and the second circuit group, devices in the receiving circuit, the sampling circuit and the processing circuit are multiplexed in the group.

12. A laser distance measurement apparatus (500, 600, 830), comprising the laser distance measurement device (100, 510) according to any one of claims 1-11.

13. The apparatus (600) according to claim 12, further including a scanning device (160, 520, 602), wherein:
the scanning device (160, 520, 602) is configured to make the laser pulse sequences from the laser distance measurement device (100, 510) exit after changing prorogation direction and make at least a portion of light beam reflected by the object to be detected incident on the laser distance measurement device (100, 510) after passing through the scanning device (160, 520, 602), preferably
wherein:
the scanning device (160, 520, 602) includes at least one prism whose thickness varies in a radial direction, and a motor for driving the prism to rotate;
the rotating prism is configured to refract the laser pulse sequences emitted by the laser distance measuring device to different directions to exit.

14. A laser distance measurement method (700), comprising using the laser distance measurement apparatus (500, 600, 830) according to any one of claims 12-13 to measure the distance between the laser distance measurement apparatus (500, 600, 830) and the object to be detected.

15. A mobile platform, comprising a laser distance measurement apparatus (500, 600, 830) according to any one of claims 12-13, wherein:
the mobile platform includes an unmanned aerial vehicle (800), an automobile, or a robot.

## Patentansprüche

1. Laserentfernungsmessvorrichtung (100, 510), die Folgendes umfasst:
eine Übertragungsschaltung (110, 603), die dazu ausgelegt ist, mindestens zwei Laserimpulssequenzen zu emittieren, wobei die mindestens zwei Laserimpulssequenzen unterschiedliche Emissionspfade aufweisen und die mindestens zwei Laserimpulssequenzen zu verschiedenen Zeiten emittiert werden;
eine Empfangsschaltung (120), die dazu ausgelegt ist, jede Laserimpulssequenz der mindestens zwei Laserimpulssequenzen, die von einem zu detektierenden Objekt reflektiert werden, zu empfangen und an jeder empfangenen Laserimpulssequenz eine photoelektrische Umwandlung durchzuführen, um jedes elektrische Signal von mindestens zwei elektrischen Signalen zu erhalten;
eine Abtastschaltung (130), die dazu ausgelegt ist, jedes elektrische Signal abzutasten, um Abtastergebnisse zu erhalten;
eine Verarbeitungsschaltung (140), die dazu ausgelegt ist, gemäß den Abtastergebnissen eine Entfernung zu dem zu detektierenden Objekt zu bestimmen, wobei:
Ansteuersignale in der Übertragungsschaltung (110, 603), die den mindestens zwei Laserimpulssequenzen entsprechen, mindestens eine gemultiplexte Vorrichtung der Übertragungsschaltung (110, 603) gemeinsam verwenden,
wobei die Ansteuersignale ein Signal für einen Treiber (210) zum Ansteuern einer Schaltervorrichtung (240) einer Laserdiode (230) und ein Signal für die Schaltervorrichtung (240) zum Steuern der Laserdiode (230) beinhalten,
und wobei die mindestens eine gemultiplexte Vorrichtung mindestens eines der Schaltervorrichtung (240) und des Treibers (210) ist.

2. Laserentfernungsmessvorrichtung (100, 510) nach Anspruch 1, wobei die Übertragungsschaltung (110, 603) mindestens zwei Laserdioden (230) beinhaltet und jede der zwei Laserdioden (230) dazu ausgelegt ist, eine entsprechende Laserimpulssequenz zu emittieren, vorzugsweise wobei:
die Ansteuersignale in der Übertragungsschaltung (110, 603), die den mindestens zwei Laserimpulssequenzen entsprechen, mindestens eine Vorrichtung der Übertragungsschaltung (110, 603) außer den Laserdioden (230) gemeinsam verwenden, vorzugsweise
wobei:
die mindestens eine gemeinsam verwendete gemultiplexte Vorrichtung der Übertragungsschaltung Schaltvorrichtungen der Laserdioden (230) oder Treiber (616, 617) der Schaltvorrichtungen beinhaltet;
die Schaltvorrichtungen mit den Laserdioden (230) verbunden sind, um die Laserdioden (230) zum Ein- oder Ausschalten zu steuern; und
die Treiber (616, 617) zum Ansteuern der Schaltvorrichtungen mit den Schaltvorrichtungen verbunden sind.

3. Laserentfernungsmessvorrichtung (100, 510) nach einem der Ansprüche 1-2, wobei:
die Empfangsschaltung (120) mindestens zwei photoelektrische Umwandlungsvorrichtungen beinhaltet und
jede photoelektrische Umwandlungsvorrichtung dazu ausgelegt ist, eine Laserimpulssequenz zu empfangen und die empfangene Laserimpulssequenz in ein elektrisches Signal umzuwandeln.

4. Laserentfernungsmessvorrichtung (100, 510) nach Anspruch 3, wobei:
die mindestens zwei elektrischen Signale mindestens eine Vorrichtung der Empfangsschaltung (120) außer den photoelektrischen Umwandlungsvorrichtungen gemeinsam verwenden, vorzugsweise
wobei:
die Empfangsschaltung (120) ferner einen Signalprozessor (340, 450) beinhaltet, der dazu ausgelegt ist, mindestens eine Verarbeitung durchzuführen, die ein Verstärken oder Filtern des elektrischen Signals beinhaltet, das von den photoelektrischen Umwandlungsvorrichtungen ausgegeben wird;
die mindestens zwei elektrischen Signale mindestens eine Vorrichtung des Signalprozessors (340, 450) gemeinsam verwenden.

5. Laserentfernungsmessvorrichtung (100, 510) nach Anspruch 4, wobei:
die Empfangsschaltung (120) mindestens zwei Transimpedanzverstärker (320) beinhaltet;
jeder Transimpedanzverstärker (320) der mindestens zwei Transimpedanzverstärker (320) ein entsprechendes elektrisches Signal der mindestens zwei elektrischen Signale verstärkt;
die mindestens zwei Transimpedanzverstärker (320) in einer Timesharingweise via Signalauftastung, Schalter (240, 350) oder Multiplexer mit Vorrichtungen der Transimpedanzverstärker (320) einer nächsten Stufe verbunden sind,
oder
wobei:
die Empfangsschaltung (120) einen Transimpedanzverstärker (320) beinhaltet und
die mindestens zwei photoelektrischen Umwandlungsvorrichtungen in einer Timesharingweise via Schalter (240, 350) oder Multiplexer mit dem einen Transimpedanzverstärker (320) verbunden sind.

6. Laserentfernungsmessvorrichtung (100, 510) nach einem der Ansprüche 4-5, wobei:
die mindestens zwei elektrischen Signale mindestens eine Vorrichtung der Empfangsschaltung (120) außer den photoelektrischen Umwandlungsvorrichtungen und außer einer oder mehreren Vorrichtungen in einer oder mehreren den photoelektrischen Umwandlungsvorrichtungen nachgeschalteten nachfolgenden Stufen gemeinsam verwenden, wobei die eine oder
die mehreren Vorrichtungen in der einen oder den mehreren den photoelektrischen Umwandlungsvorrichtungen nachgeschalteten nachfolgenden Stufen Vorrichtungen der photoelektrischen Umwandlungsvorrichtungen einer nächsten Stufe beinhalten.

7. Laserentfernungsmessvorrichtung (100, 510) nach einem der Ansprüche 1-6, die ferner eine Steuervorrichtung umfasst, wobei:
die Steuervorrichtung dazu ausgelegt ist, für jede Laserimpulssequenz der mindestens zwei Laserimpulssequenzen Auslösesignale an die Übertragungsschaltung (110, 603), die Empfangsschaltung (120), die Abtastschaltung (130) bzw. die Verarbeitungsschaltung (140) zu senden; und
die Übertragungsschaltung (110, 603), die Empfangsschaltung (120), die Abtastschaltung (130) bzw. die Verarbeitungsschaltung (140) auf Basis der Auslösesignale an einer Laserimpulssequenz der mindestens zwei Laserimpulssequenzen eine entsprechende Verarbeitung durchführt.

8. Laserentfernungsmessvorrichtung (100, 510) nach einem der Ansprüche 1-7, die ferner eine Steuervorrichtung umfasst, wobei:
die Steuervorrichtung dazu ausgelegt ist, für die mindestens zwei Laserimpulssequenzen einmalig ein Auslösesignal an die Übertragungsschaltung (110, 603), die Empfangsschaltung (120), die Abtastschaltung (130) bzw. die Verarbeitungsschaltung (140) zu senden;
die Übertragungsschaltung (110, 603), die Empfangsschaltung (120), die Abtastschaltung (130) und die Verarbeitungsschaltung (140) auf Basis des Auslösesignals eine Verarbeitung durchführen, die einer Laserimpulssequenz der mindestens zwei Laserimpulssequenzen entspricht, und dann eine Verarbeitung durchführen können, die einer anderen Laserimpulssequenz der mindestens zwei Laserimpulssequenzen entspricht.

9. Laserentfernungsmessvorrichtung (100, 510) nach einem der Ansprüche 1-8, wobei:
die mindestens zwei Laserimpulssequenzen oder die mindestens zwei elektrischen Signale eine erste Vorrichtung gemeinsam verwenden und
die Laserdetektionsvorrichtung eine Auswahlvorrichtung beinhaltet, wobei die Auswahlvorrichtung dazu ausgelegt ist, mindestens zwei zweite Vorrichtungen in einer Timesharingweise mit der ersten Vorrichtung zu verbinden, und jede der mindestens zwei zweiten Vorrichtungen einer entsprechenden der mindestens zwei Laserimpulssequenzen oder einem entsprechenden der mindestens zwei elektrischen Signale entspricht, vorzugsweise
wobei die Auswahlvorrichtung mindestens eines von einem Schalter (240, 350), einem Multiplexer oder einem Anschluss (420, 430) beinhaltet.

10. Laserentfernungsmessvorrichtung (100, 510) nach einem der Ansprüche 1-9, wobei:
die mindestens zwei Laserimpulssequenzen oder die mindestens zwei elektrischen Signale eine dritte Vorrichtung gemeinsam verwenden und
mindestens zwei vierte Vorrichtungen in einer Timesharingweise via Signalauftastung mit der ersten Vorrichtung verbunden sind und jede der mindestens zwei vierten Vorrichtungen einer entsprechenden der mindestens zwei Laserimpulssequenzen oder einem entsprechenden der mindestens zwei elektrischen Signale entspricht.

11. Laserentfernungsmessvorrichtung (100, 510) nach einem der Ansprüche 1-10, wobei:
die Übertragungsschaltung (110, 603), die Empfangsschaltung (120), die Abtastschaltung (130) bzw. die Verarbeitungsschaltung (140) zu einer ersten Schaltungsgruppe der Laserentfernungsmessvorrichtung (100, 510) gehören und
die Laserentfernungsmessvorrichtung (100, 510) ferner eine zweite Schaltungsgruppe beinhaltet, wobei die zweite Schaltungsgruppe Folgendes beinhaltet:
eine Übertragungsschaltung (110, 603), die dazu ausgelegt ist, mindestens zwei Laserimpulssequenzen zu emittieren, wobei die mindestens zwei Laserimpulssequenzen unterschiedliche Emissionspfade aufweisen und die mindestens zwei Laserimpulssequenzen zu verschiedenen Zeiten emittiert werden;
eine Empfangsschaltung (120), die dazu ausgelegt ist, jede Laserimpulssequenz, die von einem zu detektierenden Objekt reflektiert wird, von der Übertragungsschaltung (110, 603) in der zweiten Schaltungsgruppe zu empfangen und eine photoelektrische Umwandlung daran durchzuführen, um jedes elektrische Signal von mindestens zwei elektrischen Signalen zu erhalten;
eine Abtastschaltung (130), die dazu ausgelegt ist, jedes elektrische Signal von der Empfangsschaltung (120) in der zweiten Schaltungsgruppe abzutasten, um Abtastergebnisse zu erhalten; und
eine Verarbeitungsschaltung (140), die dazu ausgelegt ist, gemäß dem Abtastergebnis von der Verarbeitungsschaltung (140) in der zweiten Schaltungsgruppe eine Entfernung zu dem zu detektierenden Objekt zu bestimmen,
wobei für jede Schaltungsgruppe der ersten Schaltungsgruppe und der zweiten Schaltungsgruppe Vorrichtungen in der Empfangsschaltung, der Abtastschaltung und der Verarbeitungsschaltung in der Gruppe gemultiplext sind.

12. Laserentfernungsmesseinrichtung (500, 600, 830), die die Laserentfernungsmessvorrichtung (100, 510) nach einem der Ansprüche 1-11 umfasst.

13. Einrichtung (600) nach Anspruch 12, die ferner eine Scanvorrichtung (160, 520, 602) beinhaltet, wobei:
die Scanvorrichtung (160, 520, 602) dazu ausgelegt ist, die Laserimpulssequenzen von der Laserentfernungsmessvorrichtung (100, 510) zu veranlassen, nach Änderung einer Ausbreitungsrichtung auszutreten, und mindestens einen Abschnitt eines Lichtstrahls, der von dem zu detektierenden Objekt reflektiert wird, zu veranlassen auf der Laserentfernungsmessvorrichtung (100, 510) aufzutreffen, nachdem er die Scanvorrichtung (160, 520, 602) durchlaufen hat, vorzugsweise
wobei:
die Scanvorrichtung (160, 520, 602) mindestens ein Prisma, dessen Dicke in einer Radialrichtung variiert, und einen Motor zum Antreiben des Prismas zum Drehen beinhaltet;
das sich drehende Prisma dazu ausgelegt ist, die von der Laserentfernungsmessvorrichtung emittierten Laserimpulssequenzen zum Austreten in verschiedene Richtungen zu brechen.

14. Laserentfernungsmessverfahren (700), das das Verwenden der Laserentfernungsmesseinrichtung (500, 600, 830) nach einem der Ansprüche 12-13 zum Messen der Entfernung zwischen der Laserentfernungsmesseinrichtung (500, 600, 830) und dem zu detektierenden Objekt umfasst.

15. Mobile Plattform, die eine Laserentfernungsmesseinrichtung (500, 600, 830) nach einem der Ansprüche 12-13 umfasst, wobei:
die mobile Plattform ein unbemanntes Luftfahrzeug (800), ein Kraftfahrzeug oder einen Roboter beinhaltet.

## Revendications

1. Dispositif de télémétrie par laser (100, 510), comprenant :
un circuit de transmission (110, 603), configuré de manière à émettre au moins deux séquences d'impulsions laser, dans lequel lesdites au moins deux séquences d'impulsions laser présentent des trajets d'émission différents et lesdites au moins deux séquences d'impulsions laser sont émises à des instants différents ;
un circuit de réception (120), configuré de manière à recevoir chaque séquence d'impulsions laser desdites au moins deux séquences d'impulsions laser réfléchies par un objet à détecter, et à mettre en oeuvre une conversion photoélectrique sur chaque séquence d'impulsions laser reçue afin d'obtenir chaque signal électrique desdits au moins deux signaux électriques ;
un circuit d'échantillonnage (130), configuré de manière à échantillonner chaque signal électrique afin d'obtenir des résultats d'échantillonnage ;
un circuit de traitement (140), configuré de manière à déterminer une distance par rapport à l'objet à détecter selon les résultats d'échantillonnage, dans lequel :
des signaux d'attaque dans le circuit de transmission (110, 603) qui correspondent auxdites au moins deux séquences d'impulsions laser partagent au moins un dispositif multiplexé du circuit de transmission (110, 603) ;
dans lequel les signaux d'attaque incluent un signal permettant à un circuit d'attaque (210) d'exciter un dispositif de commutation (240) d'une diode laser (230) et un signal permettant au dispositif de commutation (240) de commander la diode laser (230), et dans lequel ledit au moins un dispositif multiplexé correspond à au moins l'un parmi le dispositif de commutation (240) et le circuit d'attaque (210).

2. Dispositif de télémétrie par laser (100, 510) selon la revendication 1, dans lequel le circuit de transmission (110, 603) inclut au moins deux diodes laser (230) et chacune des deux diodes laser (230) est configurée de manière à émettre une séquence d'impulsions laser correspondante, de préférence
dans lequel :
les signaux d'attaque dans le circuit de transmission (110, 603) qui correspondent auxdites au moins deux séquences d'impulsions laser partagent au moins un dispositif du circuit de transmission (110, 603), à l'exception des diodes laser (230), de préférence
dans lequel :
ledit au moins un dispositif multiplexé partagé du circuit de transmission inclut des dispositifs de commutation des diodes laser (230) ou des circuits d'attaque (616, 617) des dispositifs de commutation ;
les dispositifs de commutation sont connectés aux diodes laser (230) pour commander l'activation ou la désactivation des diodes laser (230) ; et
les circuits d'attaque (616, 617) sont connectés aux dispositifs de commutation pour exciter les dispositifs de commutation.

3. Dispositif de télémétrie par laser (100, 510) selon l'une quelconque des revendications 1 à 2, dans lequel :
le circuit de réception (120) inclut au moins deux dispositifs de conversion photoélectrique ; et
chaque dispositif de conversion photoélectrique est configuré de manière à recevoir une séquence d'impulsions laser et à convertir la séquence d'impulsions laser reçue en signal électrique.

4. Dispositif de télémétrie par laser (100, 510) selon la revendication 3, dans lequel :
lesdits au moins deux signaux électriques partagent au moins un dispositif du circuit de réception (120), à l'exception des dispositifs de conversion photoélectrique, de préférence,
dans lequel :
le circuit de réception (120) inclut en outre un processeur de signal (340, 450) configuré de manière à mettre en oeuvre au moins un traitement, notamment une amplification ou un filtrage du signal électrique fourni en sortie à partir des dispositifs de conversion photoélectrique ;
lesdits au moins deux signaux électriques partagent au moins un dispositif du processeur de signal (340, 450).

5. Dispositif de télémétrie par laser (100, 510) selon la revendication 4, dans lequel :
le circuit de réception (120) inclut au moins deux amplificateurs à transimpédance (320) ;
chaque amplificateur à transimpédance (320) desdits au moins deux amplificateurs à transimpédance (320) amplifie un signal électrique correspondant desdits au moins deux signaux électriques ;
lesdits au moins deux amplificateurs à transimpédance (320) sont connectés à des dispositifs d'étage successif des amplificateurs à transimpédance (320), en temps partagé, par l'intermédiaire d'un déclenchement périodique de signal, de commutateurs (240, 350) ou de multiplexeurs ; ou
dans lequel :
le circuit de réception (120) inclut un amplificateur à transimpédance (320) ; et
lesdits au moins deux dispositifs de conversion photoélectrique sont connectés à l'amplificateur à transimpédance (320), en temps partagé, par l'intermédiaire de commutateurs (240, 350) ou de multiplexeurs.

6. Dispositif de télémétrie par laser (100, 510) selon l'une quelconque des revendications 4 à 5, dans lequel :
lesdits au moins deux signaux électriques partagent au moins un dispositif du circuit de réception (120), à l'exception des dispositifs de conversion photoélectrique et à l'exception d'un ou plusieurs dispositifs au niveau d'un ou plusieurs étages consécutifs en aval des dispositifs de conversion photoélectrique, dans lequel ledit un ou lesdits plusieurs dispositifs au niveau dudit un ou desdits plusieurs étages consécutifs en aval des dispositifs de conversion photoélectrique incluent des dispositifs d'étage successif des dispositifs de conversion photoélectrique.

7. Dispositif de télémétrie par laser (100, 510) selon l'une quelconque des revendications 1 à 6, comprenant en outre un dispositif de commande, dans lequel :
le dispositif de commande est configuré de manière à envoyer des signaux de déclenchement au circuit de transmission (110, 603), au circuit de réception (120), au circuit d'échantillonnage (130) et au circuit de traitement (140), respectivement, pour chaque séquence d'impulsions laser desdites au moins deux séquences d'impulsions laser ; et
le circuit de transmission (110, 603), le circuit de réception (120), le circuit d'échantillonnage (130) et le circuit de traitement (140) mettent en oeuvre un traitement correspondant sur une séquence d'impulsions laser desdites au moins deux séquences d'impulsions laser sur la base des signaux de déclenchement, respectivement.

8. Dispositif de télémétrie par laser (100, 510) selon l'une quelconque des revendications 1 à 7, comprenant en outre un dispositif de commande, dans lequel :
le dispositif de commande est configuré de manière à envoyer un signal de déclenchement au circuit de transmission (110, 603), au circuit de réception (120), au circuit d'échantillonnage (130) et au circuit de traitement (140) une seule fois pour lesdites au moins deux séquences d'impulsions laser ;
le circuit de transmission (110, 603), le circuit de réception (120), le circuit d'échantillonnage (130) et le circuit de traitement (140) peuvent mettre en oeuvre un traitement correspondant à une séquence d'impulsions laser desdites au moins deux séquences d'impulsions laser, sur la base du signal de déclenchement, et à mettre en oeuvre ensuite un traitement correspondant à une autre séquence d'impulsions laser desdites au moins deux séquences d'impulsions laser.

9. Dispositif de télémétrie par laser (100, 510) selon l'une quelconque des revendications 1 à 8, dans lequel :
lesdites au moins deux séquences d'impulsions laser ou lesdits au moins deux signaux électriques partagent un premier dispositif ; et
le dispositif de détection par laser inclut un dispositif de sélection, dans lequel le dispositif de sélection est configuré de manière à connecter au moins deux deuxièmes dispositifs au premier dispositif, en temps partagé, et chacun desdits au moins deux deuxièmes dispositifs correspond à une séquence correspondante desdites au moins deux séquences d'impulsions laser ou à un signal correspondant desdits au moins deux signaux électriques, de préférence
dans lequel le dispositif de sélection inclut au moins l'un parmi un commutateur (240, 350), un multiplexeur ou un port (420, 430).

10. Dispositif de télémétrie par laser (100, 510) selon l'une quelconque des revendications 1 à 9, dans lequel :
lesdites au moins deux séquences d'impulsions laser ou lesdits au moins deux signaux électriques partagent un troisième dispositif ; et
au moins deux quatrièmes dispositifs sont connectés au premier dispositif, en temps partagé, par l'intermédiaire d'un déclenchement périodique de signal, et chacun desdits au moins deux quatrièmes dispositifs correspond à une séquence correspondante desdites au moins deux séquences d'impulsions laser ou à un signal correspondant desdits au moins deux signaux électriques.

11. Dispositif de télémétrie par laser (100, 510) selon l'une quelconque des revendications 1 à 10, dans lequel :
le circuit de transmission (110, 603), le circuit de réception (120), le circuit d'échantillonnage (130) et le circuit de traitement (140) appartiennent à un premier groupe de circuits du dispositif de télémétrie par laser (100, 510) ; et
le dispositif de télémétrie par laser (100, 510) inclut en outre un second groupe de circuits, dans lequel le second groupe de circuits inclut :
un circuit de transmission (110, 603), configuré de manière à émettre au moins deux séquences d'impulsions laser, dans lequel lesdites au moins deux séquences d'impulsions laser présentent des trajets d'émission différents et lesdites au moins deux séquences d'impulsions laser sont émises à des instants différents ;
un circuit de réception (120), configuré de manière à recevoir et à mettre en oeuvre une conversion photoélectrique sur chaque séquence d'impulsions laser en provenance du circuit de transmission (110, 603) dans le second groupe de circuits et réfléchie par un objet à détecter, afin d'obtenir chaque signal électrique d'au moins deux signaux électriques ;
un circuit d'échantillonnage (130), configuré de manière à échantillonner chaque signal électrique en provenance du circuit de réception (120) dans le second groupe de circuits, afin d'obtenir des résultats d'échantillonnage ; et
un circuit de traitement (140), configuré de manière à déterminer une distance par rapport à l'objet à détecter selon le résultat d'échantillonnage provenant du circuit de traitement (140) dans le second groupe de circuits ;
dans lequel, pour chaque groupe de circuits du premier groupe de circuits et du second groupe de circuits, des dispositifs dans le circuit de réception, dans le circuit d'échantillonnage et dans le circuit de traitement sont multiplexés dans le groupe.

12. Appareil de télémétrie par laser (500, 600, 830), comprenant le dispositif de télémétrie par laser (100, 510) selon l'une quelconque des revendications 1 à 11.

13. Appareil (600) selon la revendication 12, incluant en outre un dispositif de balayage (160, 520, 602), dans lequel :
le dispositif de balayage (160, 520, 602) est configuré de manière à amener les séquences d'impulsions laser en provenance du dispositif de télémétrie par laser (100, 510) à sortir après un changement de direction de propagation et à amener au moins une partie de faisceau lumineux réfléchie par l'objet à détecter à être incidente sur le dispositif de télémétrie par laser (100, 510) après avoir traversé le dispositif de balayage (160, 520, 602), de préférence,
dans lequel :
le dispositif de balayage (160, 520, 602) inclut au moins un prisme dont l'épaisseur varie dans une direction radiale, et un moteur pour entraîner le prisme en rotation ;
le prisme rotatif est configuré de manière à réfracter les séquences d'impulsions laser émises par le dispositif de télémétrie par laser vers différentes directions de sortie.

14. Procédé de télémétrie par laser (700), comprenant l'étape consistant à utiliser l'appareil de télémétrie par laser (500, 600, 830) selon l'une quelconque des revendications 12 à 13 pour mesurer la distance entre l'appareil de télémétrie par laser (500, 600, 830) et l'objet à détecter.

15. Plateforme mobile, comprenant un appareil de télémétrie par laser (500, 600, 830) selon l'une quelconque des revendications 12 à 13, dans laquelle :
la plateforme mobile inclut un véhicule aérien sans pilote (800), une automobile ou un robot.
